(19) Europäisches Patentamt / European Patent Office / Office européen des brevets

(11) **EP 3 798 929 A1**

(12) **EUROPEAN PATENT APPLICATION**

(43) Date of publication:
**31.03.2021 Bulletin 2021/13**

(51) Int Cl.:
**G06N 3/063** (2006.01)     **G06N 3/08** (2006.01)
**G06N 3/04** (2006.01)

(21) Application number: **20195909.5**

(22) Date of filing: **14.09.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019 JP 2019178727**

(71) Applicant: **FUJITSU LIMITED**
**Kanagawa 211-8588 (JP)**

(72) Inventor: **SAKAI, Yasufumi**
**Kawasaki-shi, Kanagawa, 211-8588 (JP)**

(74) Representative: **Haseltine Lake Kempner LLP**
**Cheapside House**
**138 Cheapside**
**London**
**EC2V 6BJ (GB)**

(54) **INFORMATION PROCESSING APPARATUS, INFORMATION PROCESSING METHOD, AND INFORMATION PROCESSING PROGRAM**

(57) An information processing apparatus that executes learning of a neural network, the apparatus includes: an operation part that executes a predetermined operation on each of a plurality of pieces of input data so as to generate a plurality of pieces of first operation result data that is a result of the predetermined operation; a statistical information acquisition unit that acquires statistical information regarding a distribution of digits of most significant bits that are unsigned for each of the plurality of pieces of first operation result data; a register that stores the plurality of pieces of first operation result data based on a predetermined data type; and a control unit that executes a saturation process or a rounding process on the plurality of pieces of first operation result data based on, out of a first data type and a second data type that represent operation result data with a predetermined bit width, the second data type having a narrower bit width than the first data type, so as to generate a plurality of pieces of second operation result data; calculates a first sum total based on the statistical information by adding up a value acquired for every one of the digits by multiplying a number of data in which the most significant bits are distributed to the digits in the plurality of pieces of first operation result data by a value of the digit, calculates a second sum total based on the statistical information by adding up a value acquired for every one of the digits by multiplying a number of data in which the most significant bits are distributed to the digits in the plurality of pieces of second operation result data by a value of the digit, calculates a first quantization difference that is a difference between the first sum total and the second sum total, and stores the plurality of pieces of second operation result data in the register when the calculated first quantization difference is less than a predetermined threshold value.

FIG. 5

**Description**

FIELD

The embodiments relate to an information processing apparatus, an information processing method, and an information processing program.

BACKGROUND

A neural network (hereinafter referred to as NN), which is an example of machine learning, is a network in which an input layer, a plurality of hidden layers, and an output layer are arranged in order. Each layer has one or more nodes, and each node has a value such as input data. Then, nodes between one layer and the next layer are connected by edges, and each edge has parameters such as weight and bias.

In the NN, the value of a node of each layer is acquired by executing a predetermined operation based on the value of a node of the preceding layer and an edge weight, and the like. Then, when input data is input to a node of the input layer, the value of a node of the next layer is acquired by a predetermined operation, and moreover, using data acquired by the operation as input data, the value of the node of the next layer is acquired by a predetermined operation of the layer. Then, the value of a node of the output layer, which is the last layer, becomes output data for the input data.

When inputting or outputting data, a value is represented in a predetermined data type and read from or written to a storage device. At this time, as the range of representable values of the data type representing the value or, for example, the representation range is wider, the desired bit width increases. For example, when a data type using a floating-point number is used, the desired bit width becomes large in compensation for the wide representation range, and the used capacity and the amount of operation of the storage device increase.

In order to reduce the amount of operation of the NN, a method called quantization is used, which uses a data type whose bit width desired for representing a value is narrow. For example, in a data type that uses a fixed-point number, a representation with a fixed decimal point position is used to reduce the bit width desired for the representation as compared to a floating-point number that needs representation of mantissa and exponent. However, because the data type of fixed-point numbers has a narrow representable range compared to floating-point numbers, if the number of digits in the value increases due to an operation, an overflow may occur that falls outside the representation range and high-order bits of an operation result value may be saturated, or an underflow may occur and lower bits may be rounded. In this case, accuracy of the operation result may decrease.

Therefore, in the operation of the NN, a dynamic fixed point has been proposed which dynamically adjusts the decimal point position of operation result data acquired by the operation. Furthermore, as a method for determining an appropriate decimal point position, there is known a method of acquiring statistical information of a most significant bit that is unsigned and setting a decimal point position that satisfies a condition using a predetermined threshold value based on the statistical information.

Japanese Laid-open Patent Publication No. 07-084975, Japanese Laid-open Patent Publication No. 2012-203566, Japanese Laid-open Patent Publication No. 2009-271598, and Japanese Laid-open Patent Publication No. 2018-124681 are disclosed as related art.

In the conventional quantization method of the NN, a user specifies a variable to be quantized before starting learning and inference. It is difficult to determine, with a specific layer or a specific variable, a variable that causes less deterioration in recognition rate of the NN even when it is quantized. This is because the variable changes non-linearly depending on design conditions of multiple NNs, such as the number and size of data input to the NN and the connection relation of layers. It is conceivable that the user determines, from an empirical rule, a variable as a quantization target by selecting a specific variable whose accuracy does not significantly decrease even when it is quantized.

Whether or not quantization is possible for a given variable depends on whether or not the distribution of values of elements included in a tensor representing operation result data, for example, the distribution of values of the operation result data can be covered even in a narrow representation range, and whether or not recognition accuracy of the NN can be maintained. If the distribution of values of the operation result data is narrow, the quantization is possible, but when the distribution is too wide, the error due to the quantization becomes large and the accuracy is significantly lowered, and thus the quantization may not be performed. For example, in an early stage of learning, the value of operation result data may change greatly and the value distribution of the operation result data may become wide. Thus, even if an optimum decimal point position is determined when a value represented by a floating-point number is represented by a fixed-point number, it is not possible to prevent recognition accuracy of the NN from decreasing.

In one aspect, an object of the embodiments is to provide an information processing apparatus, information processing method, and information processing program that reduce the amount of operation while maintaining recognition accuracy of the NN.

SUMMARY

An information processing apparatus that executes learning of a neural network, the apparatus includes: an operation part that executes a predetermined operation on each of a plurality of pieces of input data so as to generate a plurality of pieces of first operation result data that is a result of the predetermined operation; a statistical information acquisition unit that acquires statistical information regarding a distribution of digits of most significant bits that are unsigned for each of the plurality of pieces of first operation result data; a register that stores the plurality of pieces of first operation result data based on a predetermined data type; and a control unit that executes a saturation process or a rounding process on the plurality of pieces of first operation result data based on, out of a first data type and a second data type that represent operation result data with a predetermined bit width, the second data type having a narrower bit width than the first data type, so as to generate a plurality of pieces of second operation result data; calculates a first sum total based on the statistical information by adding up a value acquired for every one of the digits by multiplying a number of data in which the most significant bits are distributed to the digits in the plurality of pieces of first operation result data by a value of the digit, calculates a second sum total based on the statistical information by adding up a value acquired for every one of the digits by multiplying a number of data in which the most significant bits are distributed to the digits in the plurality of pieces of second operation result data by a value of the digit, calculates a first quantization difference that is a difference between the first sum total and the second sum total, and stores the plurality of pieces of second operation result data in the register when the calculated first quantization difference is less than a predetermined threshold value.

In one aspect, the amount of operation may be reduced while maintaining recognition accuracy of NN.

BRIEF DESCRIPTION OF DRAWINGS

FIG. 1 is a diagram illustrating an example of a neural network (NN);
FIG. 2 is a diagram illustrating an example of a flowchart of learning processing of the NN;
FIG. 3 is a diagram illustrating an example of a learning system;
FIG. 4 is a diagram illustrating details of a host machine illustrated in FIG. 3;
FIG. 5 is a diagram illustrating details of an NN execution machine illustrated in FIG. 3;
FIG. 6 is a sequence chart diagram illustrating an outline of learning processing by the host machine and the NN execution machine;
FIG. 7 is a diagram illustrating a flowchart of an example of learning;
FIG. 8 is a diagram describing details of S61 and S63 in a learning process illustrated in FIG. 7;
FIG. 9 is a diagram describing a forward propagation process and a back propagation process for learning;
FIG. 10 is a diagram illustrating statistical information regarding a distribution of values of operation result data and a method of adjusting a decimal point position based on the distribution;
FIG. 11 is a diagram illustrating statistical information regarding the distribution of values of the operation result data and the method of adjusting a decimal point position based on the distribution;
FIG. 12 is a flowchart illustrating a detailed process of S63 in the flowchart illustrated in FIG. 7;
FIG. 13 is a diagram illustrating a flowchart of learning according to a first embodiment;
FIG. 14 is a flowchart illustrating a detailed process of S203 of the flowchart illustrated in FIG. 13;
FIG. 15 is a diagram illustrating recognition accuracy of the NN in learning according to the first embodiment;
FIG. 16 is a diagram illustrating an amount of operation of the NN in the learning according to the first embodiment;
FIG. 17 is a diagram describing a saturation process or a rounding process when the distribution of values of the operation result data is not too wide in learning;
FIG. 18 is a diagram describing the saturation process or the rounding process when the distribution of the values of the operation result data is too wide in learning;
FIG. 19 is a diagram illustrating a quantization error when a saturation process or a rounding process is performed when the distribution of the value of the operation result data is not too wide in the learning in the first embodiment;
FIG. 20 is a diagram illustrating a quantization error when a saturation process or a rounding process is performed when the distribution of the value of the operation result data is too wide in the learning in the first embodiment;
FIG. 21 is a diagram illustrating a configuration example of an NN processor;
FIG. 22 is a flowchart illustrating a process of acquiring, aggregating and storing statistical information by the NN processor;
FIG. 23 is a diagram illustrating an example of a logic circuit of a statistical information acquisition unit ST_AC;
FIG. 24 is a diagram illustrating a bit pattern of operation result data acquired by the statistical information acquisition unit ST AC;

FIG. 25 is a diagram illustrating an example of a logic circuit of a statistical information aggregator ST_AGR_1;

FIG. 26 is a diagram describing operation of the statistical information aggregator ST_AGR_1; and

FIG. 27 is a diagram illustrating an example of a second statistical information aggregator ST_AGR_2 and a statistical information register file ST_REG_FL.

## DESCRIPTION OF EMBODIMENTS

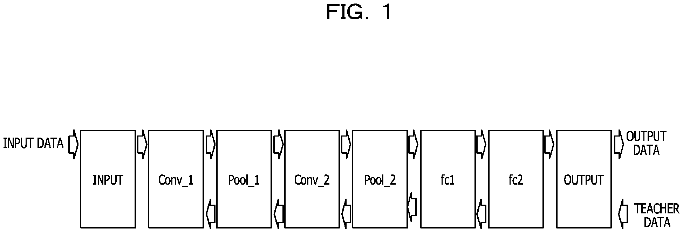

FIG. 1 is a diagram illustrating an example of a neural network (NN). The NN in FIG. 1 is, for example, an object category recognition model that inputs an image and classifies it into a finite number of categories according to a content (for example, numbers) of the input image. The NN has an input layer INPUT, a first convolutional layer Conv_1, a first pooling layer Pool_1, a second convolutional layer Conv 2, a second pooling layer Pool_2, a first fully connected layer fc1, a second fully connected layer fc2, and an output layer OUTPUT. Each layer has a single node or a plurality of nodes.

The first convolutional layer Conv_1 performs a product-sum operation of weights between nodes or the like, for example, of pixel data of an image input to the plurality of nodes in the input layer INPUT, and outputs pixel data of an output image having a feature of an image to the plurality of nodes in the first convolutional layer Conv_1. The same applies to the second convolutional layer Conv_2.

The first pooling layer Pool_1 is a layer whose node is a value determined from the local node of the first convolutional layer Conv 1, which is a previous layer, and absorbs a slight change in the image by, for example, taking the maximum value of a local node as a value of its own node.

The output layer OUTPUT finds a probability of belonging to each category from the value of the node using a softmax function or the like.

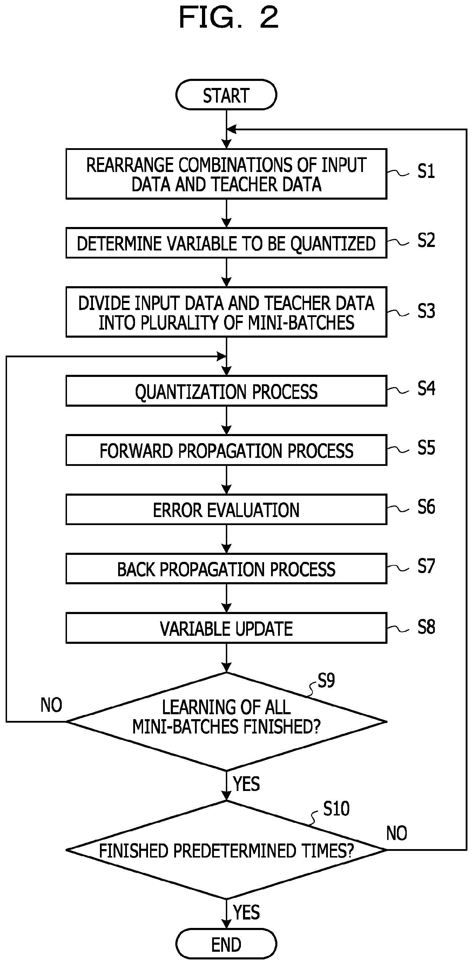

FIG. 2 is a diagram illustrating an example of a flowchart of learning processing of NN. In the learning processing, variables such as weights in the NN are optimized using, for example, a plurality of input data and a plurality of teacher data that are correct answers of output data calculated by the NN based on the input data. In the example of FIG. 2, by a mini-batch method, a plurality of combinations of input data and teacher data that correspond one-to-one are divided into a plurality of mini-batches, and a plurality of input data divided into respective mini-batches and a plurality of teacher data corresponding to the input data are input. Then, variables such as weights are optimized so as to reduce errors between the output data output by the NN for each input data and the teacher data corresponding to the input data.

In the NN, a plurality of layers may be configured by hardware circuits, and the hardware circuits may execute the operations of the respective layers. Alternatively, the NN may cause a processor that executes an operation of each layer of the NN to execute a program that causes the operation of each layer to be executed. The NN process described in FIG. 2 may be executed by a host machine and an NN execution machine described later.

As illustrated in FIG. 2, as a preliminary preparation, a plurality of combinations of input data and teacher data corresponding one-to-one are rearranged (S1), and a variable to be quantized among variables constituting the NN, such as weights, is determined (S2), and the plurality of input data and the plurality of teacher data which are rearranged are divided into a plurality of mini-batches (S3). Then, in learning, a quantization process S4, a forward propagation process S5, an error evaluation S6, a back propagation process S7, and a variable update S8 are repeated for each of the divided mini-batches. When processing of all the mini-batches have been finished (S9: YES), the processes S1 to S9 are repeatedly executed for the same combination of input data and teacher data until a predetermined number of times is reached (S10: NO).

Furthermore, instead of repeating the processes S1 to S9 with the same combination of the input data and the teacher data until the predetermined number of times is reached, it is also performed to terminate the learning processing due to that an evaluation value of a learning result, for example, an error between the output data and the teacher data falls within a certain range.

In an example of the learning processing of the NN, the determination of a quantization target in S2 is performed by setting a variable specified as the quantization target by a user prior to learning. Furthermore, for S2, the variable as the quantization target may be changed according to the progress of repeated execution of the learning.

In the quantization process S4, the quantization process is performed on the variable determined as a quantization target in S2. For example, the input layer and the hidden layer use a data type of FP32 that represents a floating-point number in 32 bits, and the output layer uses a data type of INT8 that represents an integer in 8 bits to perform quantization.

In the forward propagation process S5, operations of the respective layers are sequentially executed from the input layer of the NN toward the output layer. Describing with the example of FIG. 1, the first convolutional layer Conv 1 performs a convolutional operation on a plurality of pieces of input data included in one mini-batch input to the input layer INPUT by using weights of edges or the like, and generates a plurality of pieces of operation result data. Then, the first pooling layer Pool_1 performs processing for weakening locality of the operation result of the first convolutional layer Conv 1. Moreover, the second convolutional layer Conv_2 and the second pooling layer Pool 2 perform processing similar to the above. Finally, the fully connected layers fc1, fc2 perform the convolutional operation with weights of all edges or the like and output the output data to the output layer OUTPUT.

Next, in error evaluation S6, the error between the teacher data and the output data of the NN is calculated. Then, the back propagation process S7 for propagating the error calculated in S6 from the output layer of the NN to the input layer is executed. In the back propagation process S7, the error is partially differentiated by a variable such as the weight of each layer by propagating the error from the output layer to the input layer. Then, in the variable update S8, the current variable is updated by a partial differential result of the error due to the variable acquired in S7, and the weight or the like of each layer is updated toward an optimum value.

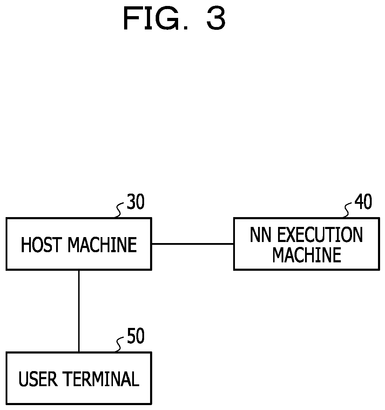

FIG. 3 is a diagram illustrating an example of a learning system. The learning system has a host machine 30 and an NN execution machine 40. For example, the host machine 30 and the NN execution machine 40 are connected via a dedicated interface. Furthermore, a user terminal 50 is made accessible to the host machine 30, and the user accesses the host machine 30 from the user terminal 50, operates the NN execution machine 40, and executes learning. The host machine 30 creates a program to be executed by the NN execution machine 40 according to an instruction from the user terminal 50, and transmits it to the NN execution machine 40. Then, the NN execution machine 40 executes the transmitted program and executes learning of the NN.

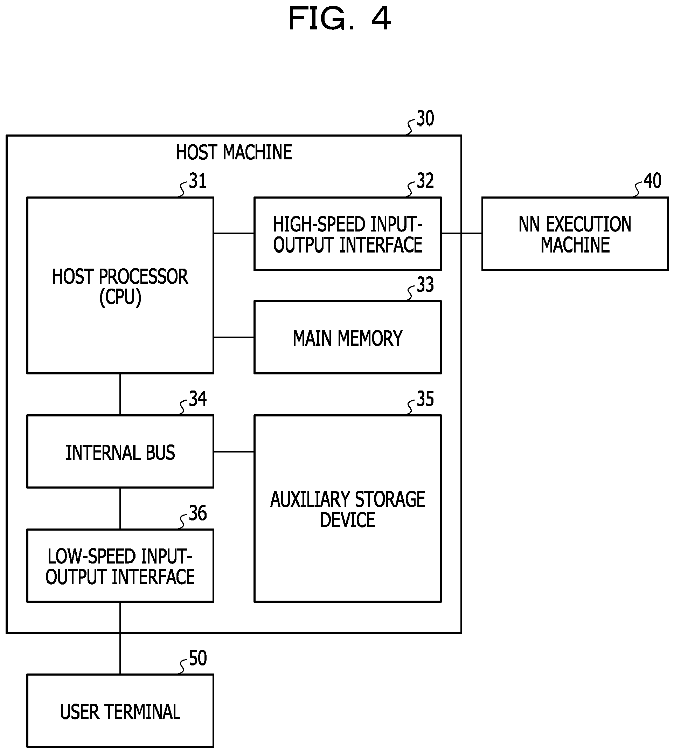

FIG. 4 is a diagram illustrating details of the host machine 30 illustrated in FIG. 3. The host machine 30 has a host processor 31 such as a CPU, a high-speed input-output interface 32 for connecting to the NN execution machine 40, a main memory 33 such as SDRAM, and an internal bus 34. Moreover, it has an auxiliary storage device 35 such as a large-capacity HDD connected to the internal bus 34, and a low-speed input-output interface 36 for connecting to the user terminal 50.

The host processor 31 of the host machine 30 executes a program that is stored in the auxiliary storage device 35 and expanded in the main memory 33. The high-speed input-output interface 32 is an interface that connects the host processor 31 such as PCI Express and the NN execution machine 40, for example. The main memory 33 stores programs and data executed by the processor.

The internal bus 34 connects a peripheral device, which is slower than the processor, to the processor and relays communication between them. The low-speed input-output interface 36 is connected to a keyboard and a mouse of the user terminal 50 via a USB or the like, or is connected to an Ethernet (registered trademark) network, for example.

The auxiliary storage device 35 stores an NN learning program, input data, and teacher data. The host processor 31 executes the NN learning program and, for example, transmits the learning program, input data, and teacher data to the NN execution machine 40, and causes the NN execution machine 40 to execute the learning program.

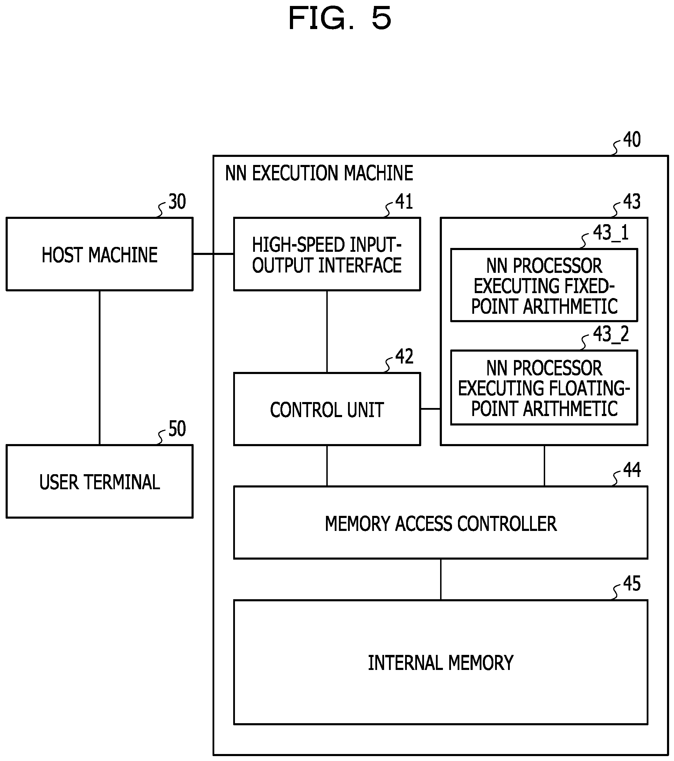

FIG. 5 is a diagram illustrating details of the NN execution machine 40 illustrated in FIG. 3. The NN execution machine 40 has a high-speed input-output interface 41 that relays communication with the host machine 30, and a control unit 42 that executes a corresponding process based on commands and data from the host machine 30. Furthermore, the NN execution machine 40 has an NN processor 43, a memory access controller 44, and an internal memory 45.

The NN processor 43 executes a program based on the program and data transmitted from the host machine 30, and executes a learning process. The NN processor 43 has an NN processor 43_1 that executes fixed-point arithmetic and an NN processor 43_2 that executes floating-point arithmetic. However, the NN processor 43 2 that executes the floating-point arithmetic may be omitted.

The NN processor 43_1, which executes fixed-point arithmetic, has a statistical information acquisition circuit for acquiring statistical information regarding processes operation result data such as operation results calculated in the NN and variables updated by learning, and a valid most significant bit and a valid least significant bit of data in the memory, and the like. The NN processor 43_1, which executes fixed-point arithmetic, acquires statistical information of operation result data acquired by operation while performing learning, and adjusts a fixed-point position of operation result data to an optimum position based on the statistical information.

The high-speed input-output interface 41 is, for example, PCI Express and relays communication with the host machine 30.

The control unit 42 stores the program and data transmitted from the host machine 30 in the internal memory 45 and, in response to a command from the host machine 30, instructs the NN processor 43 to execute the program. The memory access controller 44 controls an access process to the internal memory 45 in response to an access request from the control unit 42 and an access request from the NN processor 43.

The internal memory 45 stores a program executed by the NN processor 43, processing target data, processing result data, and the like. The internal memory 45 is, for example, an SDRAM, a faster GDR5, a broadband HBM2, or the like.

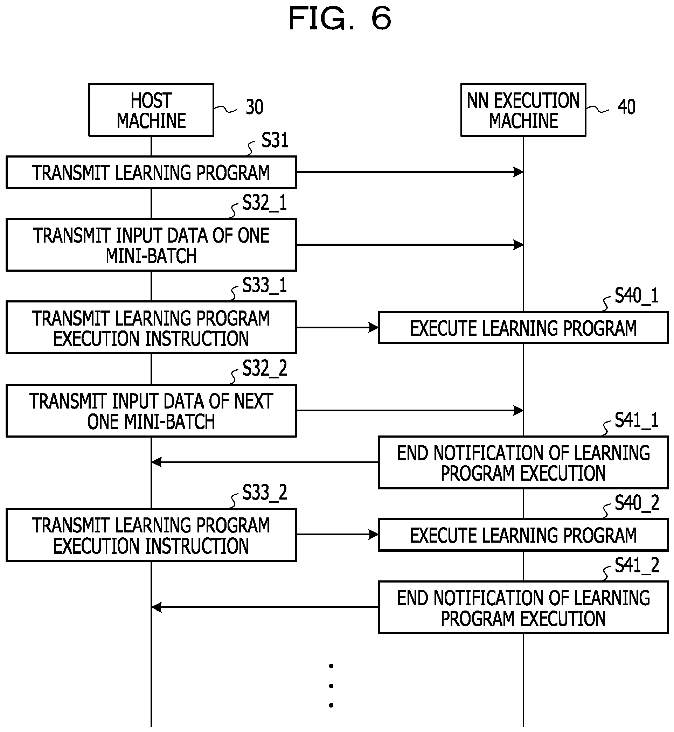

FIG. 6 is a sequence chart illustrating an outline of the learning processing by the host machine 30 and the NN execution machine 40. To the NN execution machine 40, the host machine 30 transmits a learning program (S31), transmits input data for one mini-batch (S32_1), and transmits a learning program execution instruction (S33_1).

In response to these transmissions, the NN execution machine 40 stores the input data and the learning program in the internal memory 45, and executes the learning program for the input data stored in the internal memory 45 in response to the learning program execution instruction (S40_1). The learning program is executed by the NN processor 43. The host machine 30 transmits input data for next one mini-batch (S32_2) and then waits until the execution of the learning program by the NN execution machine 40 is completed. In this case, two areas for storing input data are prepared in the NN execution machine 40.

When the execution of the learning program is completed, the NN execution machine 40 transmits a notification of end of the learning program execution to the host machine 30 (S41_1). The host machine 30 switches an input data area referenced by the learning program and transmits the learning program execution instruction (S33_2). Then, the NN execution machine 40 executes the learning program (S40 2) and transmits an end notification (S41_2). This process is repeated to proceed with the NN learning.

The learning of the NN has a process (variable update) to execute an operation (forward propagation process) of each layer in a forward direction of the NN, propagates an error between output data of the output layer and teacher data in a reverse direction of the NN and calculates a partial differential of the error by the variable of each layer (back propagation process), and updates the variable according to a partial differential result of the error by the variable of each layer. The whole learning processing of the NN may be executed by the NN execution machine 40, or a part of the processing may be executed by the host machine 30.

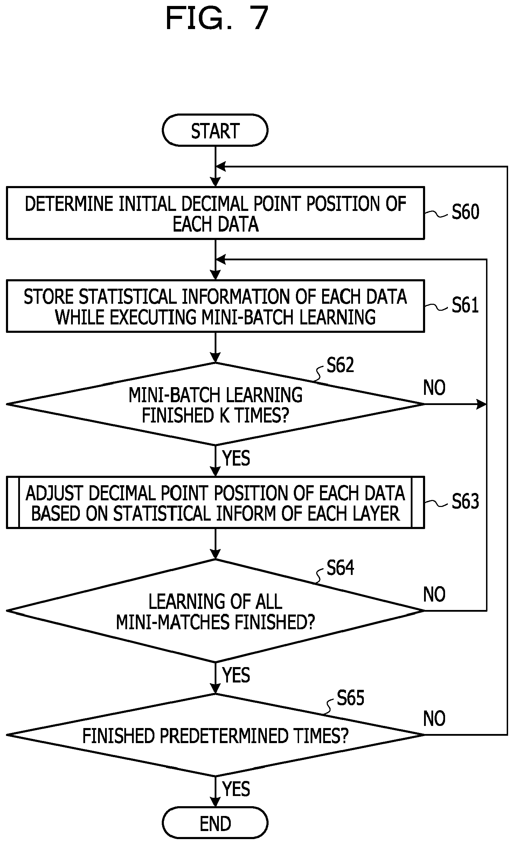

FIG. 7 is a diagram illustrating a flowchart of an example of learning. In the example of learning, statistical information of the distribution of values of operation result data of each layer is stored, and the fixed-point position of each operation result data of each layer is adjusted based on the stored statistical information of each layer.

First, the NN processor 43 determines an initial decimal point position of each operation result data (operation result of each layer, variable, and the like) (S60). The determination of the initial decimal point position is performed by pre-learning with a floating-point number or by specification by the user. When performing pre-learning with a floating-point number, the operation result data in the NN is a floating-point number. Thus, an exponent part corresponding to the size of the operation result data is generated, and the decimal point position does not need to be adjusted like a fixed-point number. Then, an optimum decimal point position of the fixed-point number of each operation result data is determined based on the operation result data of the floating-point number.

Next, the NN processor 43 acquires and stores statistical information regarding the distribution of values of each operation result data while executing mini-batch learning (S61). The NN processor 43_1 that executes fixed-point arithmetic included in the NN processor 43 has a statistical information acquisition circuit that acquires statistical information such as a distribution of effective bits of operation results of the fixed-point arithmetic unit, or the like. By causing the NN processor 43 to execute an operation instruction with a statistical information acquisition process, the statistical information of operation result data may be acquired and stored during the mini-batch learning. S61 is repeated until the mini-batch learning is executed K times (S62: NO). When the mini-batch learning is executed K times (S62: YES), the fixed-point position of each operation result data in the NN is adjusted based on the statistical information of each layer of the distribution of values of operation result data (S63).

The statistical information acquisition circuit in the NN processor 43 described above and a method of adjusting the fixed-point position based on the statistical information of each layer regarding the distribution will be described in detail later.

Then, the NN processor 43 repeats S61, S62, and S63 until the learning of all the mini-batches is completed (S64: NO). When the learning of all the mini-batches is completed (S64: YES), the process returns to the first S60 and repeats the learning of all mini-batches until a predetermined number of times is reached (S65: NO).

With the example of learning described in FIG. 7, the case has been described where the statistical information of the distribution of values of operation result data is stored and the fixed-point positions of the operation result data are adjusted based on the stored statistical information, but the embodiment is not limited thereto. For example, the fixed-point position may be replaced with a quantization range corresponding to another data type. For example, the operation result data may be replaced with another variable in each layer of the NN. For example, the statistical information of the distribution of values may be replaced with other statistical information such as the maximum value and average value of values.

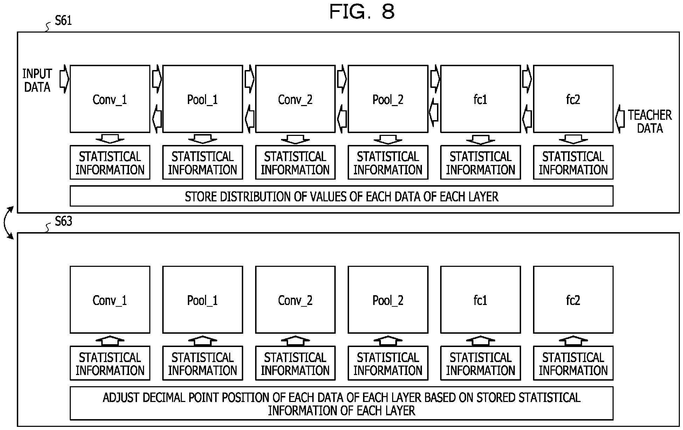

FIG. 8 is a diagram explaining details of S61 and S63 in the learning process illustrated in FIG. 7. In S61, the NN processor 43 repeatedly executes the mini-batch learning K times. In each mini-batch learning, while executing the forward propagation process, the back propagation process, and the process of updating the variable in each layer in order for a plurality of pieces of input data and teacher data of the mini-batch, the NN processor 43 acquires and stores the statistical information regarding the distribution of values of operation result data of each layer in each process.

Furthermore, in S63, the NN processor 43 determines and updates the optimum decimal point position of each operation result data of each layer based on the distribution of effective bits of the plurality of pieces of operation result data included in the stored statistical information.

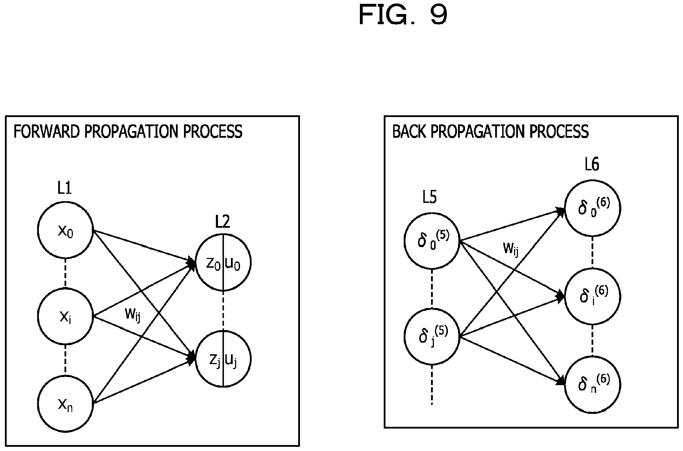

FIG. 9 is a diagram describing the forward propagation process and the back propagation process of learning. In the forward propagation processing, the fixed-point arithmetic unit in the NN processor 43 cumulatively adds a value acquired by multiplying data $X_0$ to $X_n$ of nodes of layer L1 close to the input layer by an edge weight $W_{ij}$ and adding a

bias thereto, and calculates data $Z_0$ to $Z_j$... input to nodes of layer L2 close to the output layer. Moreover, output data $U_0$ to $U_j$... of an activation function for the output data $Z_0$ to $Z_j$... is calculated by an activation function of the layer L2. The operations in the layers L1, L2 are repeated from the input layer to the output layer.

On the other hand, in the back propagation process, the fixed-point arithmetic unit in the NN processor 43 calculates a partial differential $\delta_0^{(5)}$ to $\delta_j^{(5)}$ ... of layer L5 close to the input layer from a partial differential result $\delta_0^{(6)}$ to $\delta_i^{(6)}$ to $\delta_n^{(6)}$ of an error between output data of the output layer and teacher data by a variable of layer L6 close to the output layer. Then, an update data $\Delta W_{ij}$ of weight is calculated according to the value acquired by partially differentiating the partial differential $\delta_0^{(5)}$ to $\delta_j^{(5)}$ ... of the layer L5 with a variable such as the weight $W_{ij}$. The operations in the layers L6, L5 are repeated from the output layer to the input layer.

Moreover, in the process of updating the variable in each layer in order, the update data $\Delta W_{ij}$ is subtracted from the existing weight $W_{ij}$ to calculate the updated weight $W_{ij}$.

Input data $Z_0$ to $Z_j$... to the layer L2, the output data $U_o$ to $U_j$... of the activation function, partial differential results $\delta_0^{(6)}$ to $\delta_i^{(6)}$ to $\delta_n^{(6)}$, and $\delta_0^{(5)}$ to $\delta_j^{(5)}$ ... in the layers L6, L5, and the weight update data $\Delta W_{ij}$ and the updated weight $W_{ij}$ illustrated in FIG. 9 are operation result data of the NN. By adjusting decimal point positions of these operation result data to optimum positions, operation accuracy of each operation result data may be increased, and accuracy of learning may be increased.

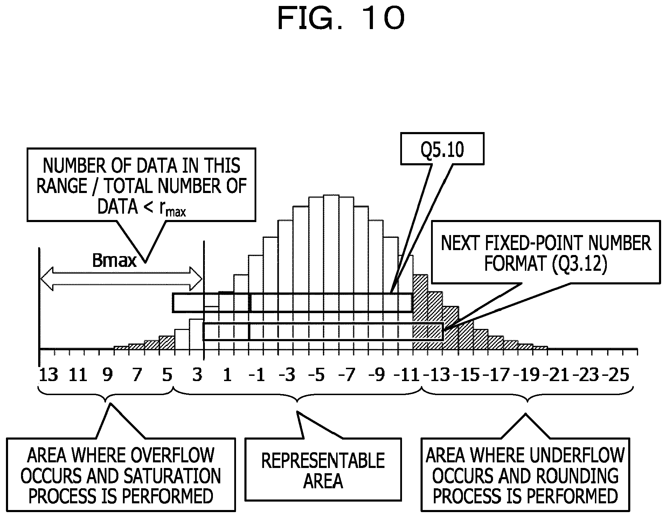

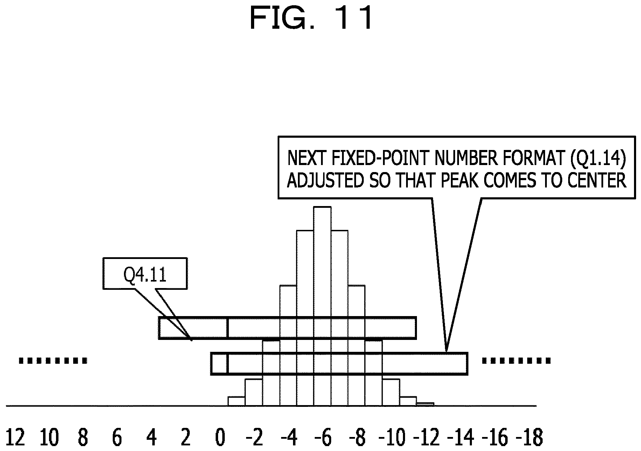

FIGs. 10 and 11 are diagrams illustrating statistical information regarding the distribution of values of the operation result data and a method of adjusting the decimal point positions based on the distribution. As will be described later, the NN processor 43 has a fixed-point arithmetic unit, and has a statistical information acquisition circuit that acquires statistical information regarding an output of each arithmetic unit and a distribution of effective bits of the operation result data stored in the internal memory 45.

The statistical information regarding the distribution of effective bits of the operation result data is as follows, for example.

(1) Distribution of positions of the most significant bits that are unsigned
(2) Distribution of positions of the least significant bits that are non-zero
(3) Maximum value of positions of the most significant bits that are unsigned
(4) Minimum value of positions of the least significant bits that are non-zero

(1) Positions of the most significant bits that are unsigned are positions of the most significant bits of effective bits of the operation result data. The unsigned is "1" when a sign bit is 0 (positive) and "0" when the sign bit is 1 (negative). (2) Positions of the least significant bits that are non-zero are positions of the least significant bits of effective bits of the operation result data. If the sign bit is 0 (positive), it is the position of the least significant bit of "1", and if the sign bit is 1 (negative), it is also the position of the least significant bit of "1". When the sign bit is 1, bits other than the sign bit are represented by the two's complement, and a process of converting the complement of 2 to the original number includes a process of subtracting 1 so as to invert 1, 0 to 0, 1. Therefore, the least significant bit of "1" becomes "0" by subtracting 1 and becomes "1" by bit inversion, which is the position of the least significant bit of the effective bits.

(3) Maximum value of positions of the most significant bits that are unsigned is the maximum position out of positions of the most significant bits of the effective bits of each of the plurality of pieces of operation result data. Similarly, (4) Minimum value of positions of the least significant bits that are non-zero is the minimum position out of positions of the least significant bits of the effective bits of each of the plurality of pieces of operation result data.

As an example, FIGs. 10 and 11 illustrate (1) histograms illustrating the distribution of positions of the most significant bits that are unsigned. The horizontal axis represents the power of the effective most significant bit (logarithmic value of 2) of the operation result data corresponding to a bin of the histogram, and the bin height is the number of operation result data having an effective most significant bit of each bin. In the example illustrated in FIG. 10, the spread of the distribution of positions of the most significant bits that are unsigned (the number of histogram bins) is from -25 bins to +13 bins, and the number of bins is 25 + 13 + 1 = 39. The highest bin of the distribution corresponds to (3) Maximum value of positions of the most significant bits that are unsigned. In the case of a 16-bit fixed-point number, the number of bits excluding the sign bit is 15 bits. Then, the format of the fixed-point number is expressed as Qn.m. Qn.m means an n-bit integer part and an m-bit fractional part. The decimal point position is located between an integer part and a fractional part. Determining a fixed-point number format having information on the number of bits representing the integer part and the number of bits representing the fractional part when the decimal point position and the bit width are fixed corresponds to determining the decimal point position for the digit of the data value. Furthermore, determining the fixed-point number format corresponds to limiting by a bit width smaller than the operation result data when the operation result data that is an operation result is stored as output data. A range of digits that may be expressed without saturating or rounding a value when limiting the bit width of operation result data is called a bit range in a first embodiment.

On the other hand, the spread of the distribution of positions of the most significant bits that are unsigned (the number of histogram bins) changes depending on the plurality of pieces of operation result data. The spread of the distribution of the histogram in FIG. 10 is such that the number of bins is 33 from the -22 bin to the +10 bin, and does not fall within 15 bits of the fixed-point number (the region that may be represented by the fixed-point number). A bit higher than 15 bits in this representable area is overflowed and is subjected to a saturation process, and a lower bit is underflowed and is subjected to a rounding process. Here, the saturation process is a process to change, among the plurality of pieces of operation result data, data in which the most significant bits are distributed to digits larger than the maximum digit of the bit width of the fixed-point number, for example, above 15 bits of representable area, to data having values in which the most significant bits are distributed to the maximum digit. Furthermore, the rounding process is a process to change, among the plurality of pieces of operation result data, data in which the most significant bits are distributed to digits smaller than the minimum digit of the bit width of the fixed-point number, for example, below 15 bits of representable area, to data having values in which the most significant bits are distributed to the minimum digit.

On the other hand, in the histogram of FIG. 11, the number of bins is 12 from the -13 bin to the -2 bin, which is within 15 bits of the fixed-point number.

Accordingly, a method of determining the decimal point position based on the statistical information, which is a histogram, differs between a case where the width (number of bins) of the histogram exceeds 15 bits and does not fit in the representable area (15 bits) (FIG. 10) and a case where it fits therein (FIG. 11).

If the horizontal width (number of bins) 33 of the histogram in FIG. 10 exceeds 15 bits and does not fit in the representable area (15 bits), the fixed-point number format (decimal point position) is determined as follows. For example, the maximum number of bits Bmax on the high-order bit side is determined with which the ratio of the number of data on the high-order bit side of the histogram to the total number of data satisfies to be less than a predetermined threshold value r_max, and the fixed-point number format is determined on the lower side of the determined Bmax. As illustrated in FIG. 10, bins are included on the upper side of the determined Bmax or, for example, there are data values that may not be represented by the newly determined fixed-point number format. In the determination method of the decimal point position of the first embodiment, by allowing the overflow of data value, outlier data in which the position of the most significant bit is on a significantly upper side may be ignored, and the number of data that fits in the representable area may be increased.

In the example in FIG. 10, while an existing fixed-point number format Q5.10 contains bits from -10 to +4, a fixed-point number format Q3.12 after updated is changed to contain bits from -12 to +2. As a result of this change, values of the operation result data with the most significant bits of +3 to +10 of effective bits are saturated due to overflow, but at least the most significant bits in the operation result data in which the most significant bits of effective bits are -11, -12 are not rounded.

In the example of FIG. 11, the existing fixed-point number format Q4.11 is shifted to the high-order bit side of the histogram, and thus the fixed-point number format after updated is changed to Q1.14. In a case of Q1.14, the center bit of the format Q1.14 is located at the position of the peak of the histogram, for example, the position of the mode of the histogram. Therefore, at least the most significant bits of the operation result data in which the most significant bits of effective bits are -12, -13, and - 14 are not rounded.

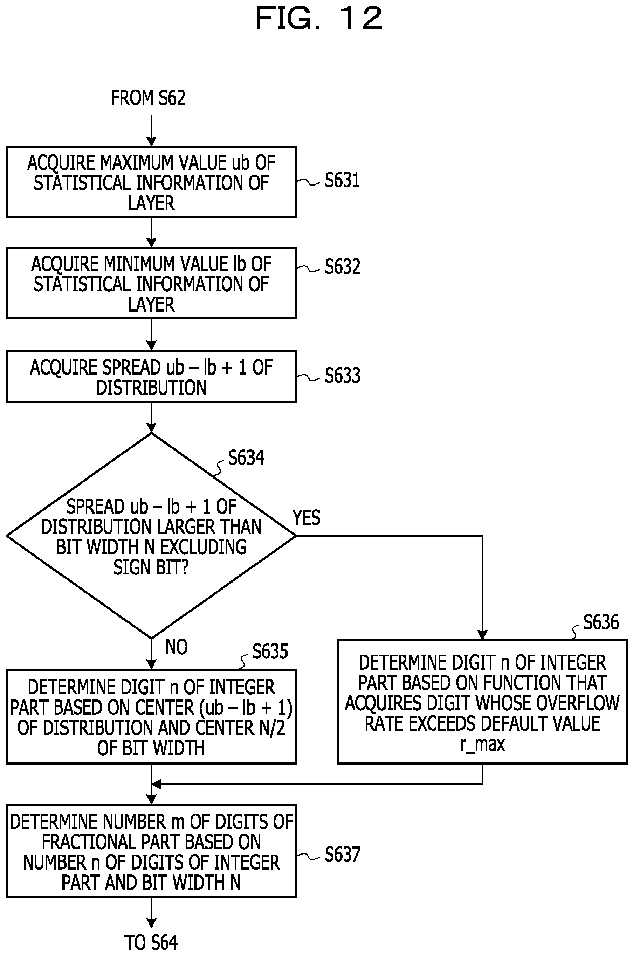

FIG. 12 is a flowchart illustrating detailed processes of S63 in the flowchart illustrated in FIG. 7. In the detailed processes of S63, the fixed-point position of each operation result data in the NN is adjusted based on the statistical information of the distribution of values of the operation result data determined by conditions. Hereinafter, the detailed processes of S63 described with reference to FIG. 12 may be all executed by a post processor of the host machine 30, or a part of the processes may be executed by the NN processor 43 of the NN execution machine 40.

The process is started upon completion of S62, and a maximum value ub of statistical information is acquired from the statistical information of each layer stored in S61 (S631). The maximum value ub of the statistical information corresponds to, for example, the maximum value of the positions of the above-mentioned most significant bits that are unsigned. Next, a minimum value lb of the statistical information is acquired from the statistical information of each layer stored in S61 (S632). The minimum value lb of the statistical information corresponds to, for example, the minimum value of the positions of the most significant bits that are unsigned. Next, the spread ub - lb + 1 of the distribution is acquired (S633). The spread ub - lb + 1 indicates the width between the maximum value and the minimum value of the statistical information. Next, it is determined whether or not the spread ub - lb + 1 of the distribution is larger than a bit width N excluding the sign bit (S634). This determination corresponds to case classifications in a case where the width (number of bins) of the histogram does not fit in the representable area (FIG. 10) and a case where it fits in the area (FIG. 11).

If the spread ub - lb + 1 of the distribution is not larger than the bit width N excluding the sign bit (S634: NO), the number n of digits in the integer part is determined based on the distribution center (ub - lb + 1)/2 and the bit width center N/2 (S635). The number n of digits in the integer part corresponds to the n-bit integer part represented by the fixed-point number format Qn.m. When the spread of the distribution is larger than the bit width N excluding the sign bit (S634: YES), the number n of digits in the integer part is determined based on the function that acquires a digit whose overflow rate exceeds the default value r max (S636). Next, the number m of digits in the fractional part is determined based on the number n of digits in the integer part and the bit width N acquired in S635 or S636 (S637). The number m of digits in the fractional part corresponds to the m-bit fractional part represented in the fixed-point number format Qn.m.

[Determination of quantization target in learning according to first embodiment]

A method of determining the data type of a variable as a quantization target in learning according to the first embodiment will be described. In the learning according to the first embodiment, it is determined whether or not quantization is performed for each variable in each layer of the NN or, for example, whether or not to use a data type having a narrow bit width for expressing a value. The learning according to the first embodiment has an effect of reducing the amount of operation of the NN while maintaining recognition accuracy of the NN.

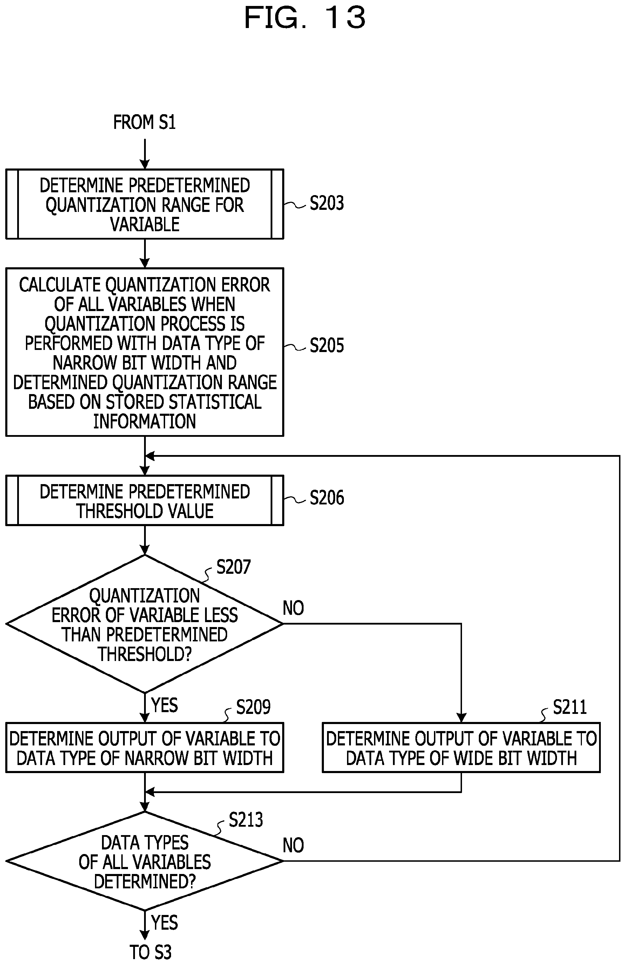

FIG. 13 is a diagram illustrating a flowchart of learning according to the first embodiment. The learning according to the first embodiment is equivalent to the learning described in FIG. 2 in processing using a common sign, but differs in the following points. When determining the variable to be quantized in S2 of the flowchart described in FIG. 2, a quantization error of the variable when quantization is performed with a data type of narrow bit width is compared with a predetermined threshold value, and the data type used when outputting the value of the variable is determined. The process of S2 is executed when the mini-batch learning for predetermined input data and teacher data is completed once or more and the process returns from S10 to S1 described in FIG. 2. When the process of S2 is executed, the statistical information for every update interval K of a quantization range in the mini-batch learning is stored and accumulated for every variable. The statistic information for every K update intervals of the quantization range in the mini-batch learning is also referred to as a plurality of pieces of statistical information acquired by repeating learning.

The process is started upon completion of S1, and the host processor 31 determines a predetermined quantization range for the variable (S203). The quantization range may be determined by the method based on the statistical information of the distribution described in FIGs. 10 and 11 or a method based on a quantization error. A method of determining the quantization range based on the quantization error will be described later.

Next, the host processor 31 calculates quantization errors of all variables when the quantization process is performed with the data type of narrow bit width and the quantization range determined in S203 based on the stored statistical information (S205). The quantization process includes performing the quantization process based on the quantization range determined in S203. The post-processor 31 selects the data type of narrow bit width from candidates of data types used when outputting data of variables. The candidates of data types are, for example, an INT8 data type that represents an integer in 8 bits and an FP32 data type that represents a floating-point number in 32 bits.

Next, the host processor 31 determines the predetermined threshold value (S206). The predetermined threshold value may be designated by the user or may be determined based on the statistical information stored in S61. When the predetermined threshold value is determined based on the statistical information, it is determined based on changes in the quantization errors calculated based on the statistical information. The predetermined threshold value may be determined based on, for example, the average value of all quantization errors. By determining based on the changes in the quantization errors calculated based on the statistical information, the threshold value for determining the variable as a quantization target corresponding to the input data may be adjusted, and thus it is possible to determine the quantization target with higher accuracy.

Next, the host processor 31 determines whether or not the quantization error calculated in S205 is less than the predetermined threshold value (S207). When the quantization error is less than the predetermined threshold value (S207: YES), it is determined to use the data type of narrow bit width used for the calculation of the quantization error for outputting the variable (S209). When the quantization error is not less than the predetermined threshold value (S207: NO), it is determined to use a data type having a wider bit width than the data type of narrow bit width for outputting the variable (S211).

Then, S206 to S211 are repeated until the data types of all variables are determined (S213: NO). When the data types of all variables are determined (S213: YES), the process proceeds to S3.

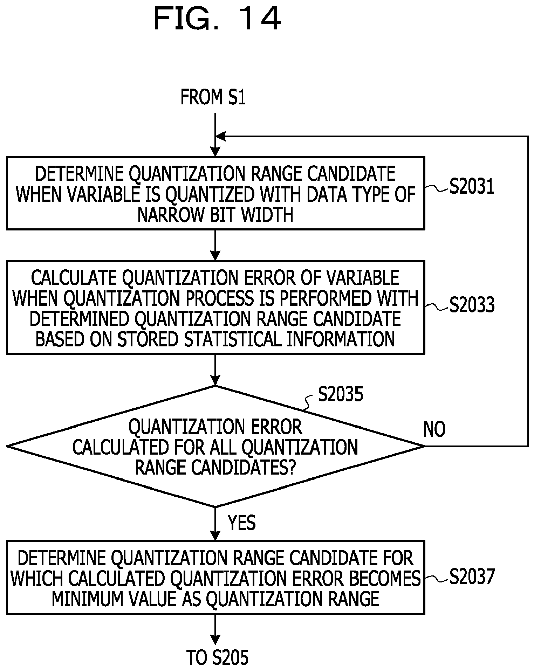

FIG. 14 is a flowchart illustrating detailed processes of S203 of the flowchart illustrated in FIG. 13. Hereinafter, the detailed processes of S203 described with reference to FIG. 14 may be all executed by the host machine 30, or a part of the processes may be executed by the NN execution machine 40.

The process is started upon completion of S1, and a quantization range candidate when a variable is quantized with a data type of narrow bit width is determined (S2031).

Next, the quantization error of the variable when the quantization process is performed with the quantization range candidate determined in S2031 is calculated based on the statistical information stored in S61 (S2033). The method of calculating the quantization error is similar to S205.

S2031 to S2033 are repeated until quantization errors are calculated for all the quantization range candidates (S2035: NO). When quantization errors have been calculated for all the quantization range candidates (S2035: YES), the process proceeds to S2037.

Then, the quantization range candidate for which the calculated quantization error becomes a minimum value is determined as the quantization range (S2037).

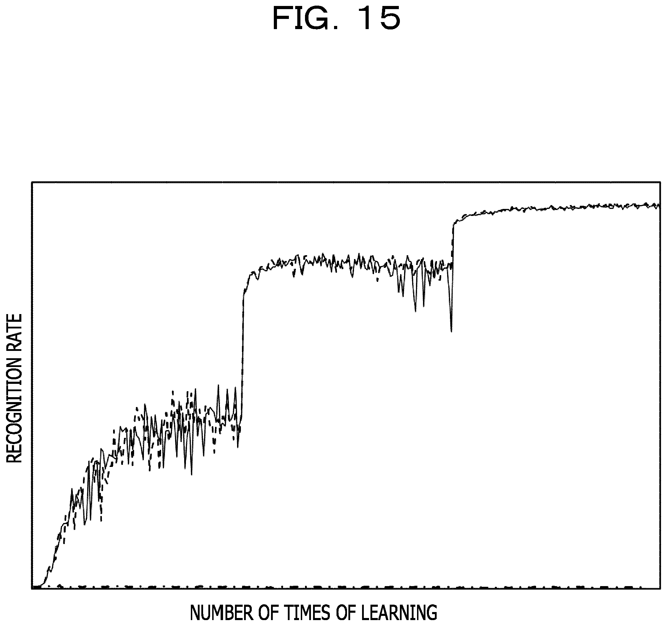

FIG. 15 is a diagram illustrating recognition accuracy of the NN in learning according to the first embodiment. The graph in the diagram illustrates a learning result by NN (ImageNet, resnet-50), the vertical axis illustrates a recognition rate of the NN, and the horizontal axis illustrates the number of times of learning of the NN. The dotted line illustrated in FIG. 15 illustrates a case of performing the learning with all variables of the NN being fixed to FP32. The dotted and dashed line illustrated in FIG. 15 illustrates a case of performing the learning with all the variables of the NN being fixed to INT8. The solid line illustrated in FIG. 15 illustrates a case of determining and learning the variables using INT8 by the learning method according to the first embodiment. As illustrated in FIG. 15, the solid line corresponding to the method of the first embodiment has a recognition rate equivalent to the dotted line using FP32, which is a data type with a wide representation range, for all variables. On the other hand, the dotted and dashed line indicates a significantly low recognition rate.

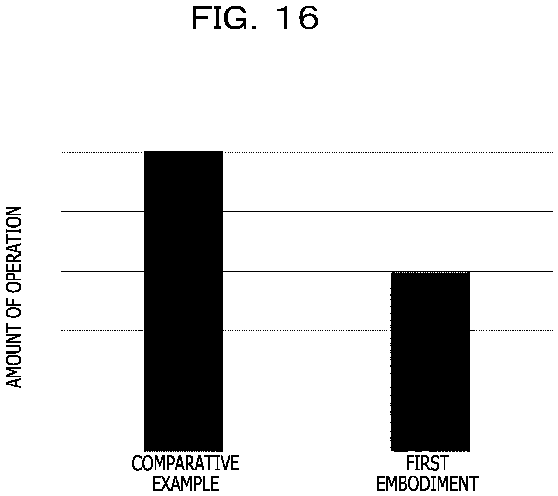

FIG. 16 is a diagram illustrating an amount of operation of NN in the learning according to the first embodiment. Graphs in FIG. 16 illustrate the amount of operation by NN (ImageNet, resnet-50). The graph on the left side of FIG. 16 illustrates a comparative example of performing learning with all variables of NN being fixed to FP32. The graph on the right side of FIG. 16 illustrates a case of determining and learning the variables using INT8 by the learning method according to the first embodiment. As illustrated in FIG. 16, the graph on the right side corresponding to the method of the first embodiment has the amount of operation of about 60% with respect to the graph on the left side.

From FIGs. 15 and 16, it can be seen that by determining the data type of the variable as the quantization target in the learning according to the first embodiment, it is possible to reduce the amount of operation while maintaining the recognition accuracy of the NN. By using the learning method according to the first embodiment, a variable that can be quantized with respect to the distribution of variables is dynamically selected, so as to select the variable as the quantization target.

Here, the variable that can be quantized is a variable that does not cause a significantly large quantization error even when quantized with a data type of a narrow representation range. When the variable as the quantization target is determined by empirical rules or pre-learning, the variable that may be quantized is limited to a specific variable whose data value distribution is not too wide from the beginning of learning. On the other hand, for example, there is a variable having a tendency such that a change in values is large and the distribution of data values is wide in the initial stage of learning, but the spread of the distribution of the data values decreases as the learning proceeds. For example, in a layer that executes a multiplication of two variables, variations in the distribution may not change significantly before and after the operation.

By determining the quantization target in the learning according to the first embodiment, for example, it is possible to increase the variables to be the quantization target in accordance with the progress of learning, and both maintaining the recognition accuracy of the NN and reducing the amount of operation may be achieved.

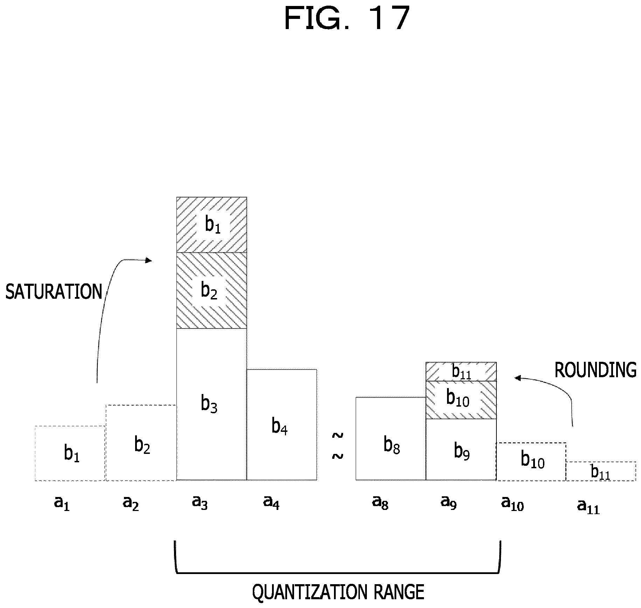

Here, a case where the quantization is possible based on the distribution of values of the variable data and a case where the quantization is not possible will be described with reference to FIGs. 17 to 20.

FIG. 17 is a diagram describing the quantization process when the distribution of values of operation result data is not too wide during the learning. FIG. 17 illustrates changes in the distribution of values of a plurality of pieces of operation result data when the saturation process or the rounding process is performed in a quantization range illustrated in a lower part of FIG. 17, in the distribution of values of a plurality of pieces of operation result data represented by a histogram. $a_i$ indicates a weight of the digit of an effective most significant bit. Each $a_i$ has an exponentiation (logarithmic value of 2) value such as $2^{n-2}$, $2^{n-1}$, $2^n$, $2^{n+1}$, $2^{n+2}$, for example. bi indicates the number of pieces of data in which the effective most significant bit among a plurality of pieces of operation result data is distributed in a digit of $a_i$. The spread of the distribution of the histogram in FIG. 17 is $a_1$ to $a_{11}$, and the quantization range is $a_3$ to $a_9$. Here, if the saturation process or rounding process is performed in the quantization range of $a_3$ to $a_9$ for the distribution of values of a plurality of pieces of operation result data in which the effective most significant bits are distributed to $a_1$ to $a_{11}$, data with effective most significant bits distributed in $a_1$, $a_2$ is changed to data having a value of the maximum value $a_3$ of the quantization range by the saturation process, and data with effective most significant bits distributed in $a_{10}$, $a_{11}$ becomes data having a value of the minimum value $a_9$ of the quantization range by the rounding process. Rectangles of dotted lines illustrated in FIG. 17 indicate histogram bins that have been subjected to the saturation process or the rounding process, and hatched rectangles indicate bins of the saturation or rounding-processed histogram, which correspond to the quantization error. When a quantization error is represented by a difference between values before and after the quantization, the quantization error is represented by the following equation (1) using $a_i$ and bi. Here, W represents a vector of variables before quantization, and $W_Q$ represents a vector of variables after quantization.

[Mathematical Formula 1]

$$\|W - W_Q\| = (a_1 b_1 + a_2 b_2 + a_3 b_3 + a_4 b_4 + \cdots + a_8 b_8 + a_9 b_9 + a_{10} b_{10} + a_{11} b_{11}) -$$
$$(a_3 b_1 + a_3 b_2 + a_3 b_3 + a_4 b_4 + \cdots + a_8 b_8 + a_9 b_9 + a_9 b_{10} + a_9 b_{11}) \quad \cdot\cdot\cdot \quad (1)$$

Furthermore, the quantization error may be represented by approximation by the following formula (2) by calculating only data of $a_1$, $a_2$, $a_{10}$, $a_{11}$ which are out of the quantization range.
[Mathematical Formula 2]

$$\|W - W_Q\| \cong (a_1 b_1 + a_2 b_2) - \left(a_3 b_1 + a_3 b_2\right) + (a_{10} b_{10} + a_{11} b_{11}) - (a_9 b_{10} + a_9 b_{11}) \quad \cdot\cdot\cdot \quad (2)$$

Since an error within the representation range is sufficiently smaller than the error for data of $a_1$, $a_2$, $a_{10}$, $a_{11}$ which are out of the quantization range, by using an approximated quantization error, the amount of operation for quantization error operation may be reduced while maintaining the recognition accuracy.
Furthermore, a squared error may be used as the quantization error, which is represented by the following formula (3).
[Mathematical Formula 3]

$$\|W - W_Q\|^2 \quad \cdot\cdot\cdot \quad (3)$$

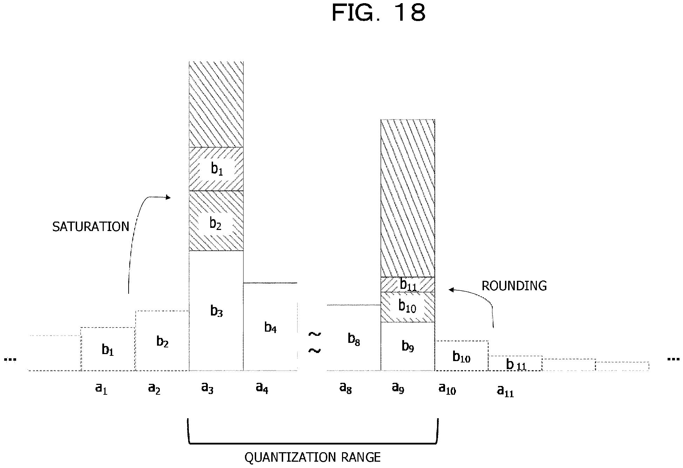

FIG. 18 is a diagram describing the quantization process when the distribution of values of operation result data is too wide during the learning. The spread of the distribution of a histogram of FIG. 18 is wider than that of the distribution of the histogram illustrated in FIG. 17, for example, $a_1$ to $a_{11}$, and three dots in FIG. 18 indicate that one or more other bins represented outside the illustrated distribution of bins are omitted. The quantization range is $a_3$ to $a_9$ as in FIG. 17. Here, if the saturation process or the rounding process is performed on the distribution of values of the operation result data in the quantization range of $a_3$ to $a_9$, data of $a_1$, $a_2$ and a range outside $a_1$ becomes data having the value of the maximum value $a_3$ of the quantization range by the saturation process. Furthermore, data of $a_{10}$, $a_{11}$ and in a range outside $a_{10}$ becomes data having the value of the minimum value $a_9$ of the quantization range by the rounding process. Rectangles of dotted lines illustrated in FIG. 18 indicate histogram bins that have been subjected to the saturation process or the rounding process, and hatched rectangles indicate bins of the saturation or rounding-processed histogram, which correspond to the quantization error. The hatched rectangles have larger areas than those in FIG. 17. From this point, it is illustrated that the number of pieces of data to be subjected to the saturation process or the rounding process is large, and it can be seen that the quantization error becomes significantly large.

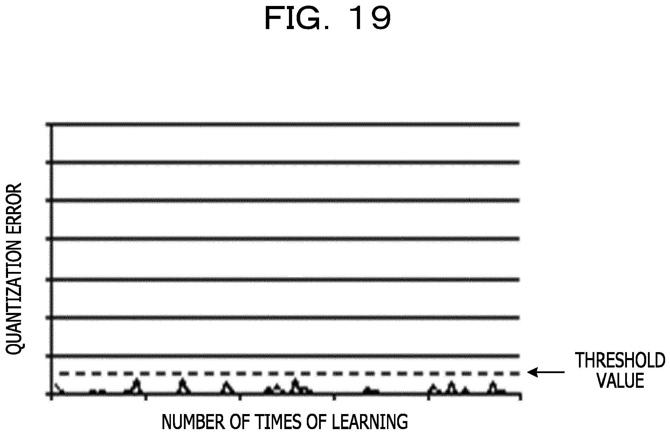

FIG. 19 is a diagram illustrating a quantization error when the saturation process or the rounding process is performed when the distribution of values of the operation result data is not too wide in the learning in the first embodiment. The graph of FIG. 19 illustrates the relationship between the number of times of learning and the quantization error, the vertical axis illustrates the magnitude of a calculated quantization error, and the horizontal axis illustrates the number of times of learning of the NN. The dotted line in the graph of FIG. 19 indicates a predetermined threshold value.

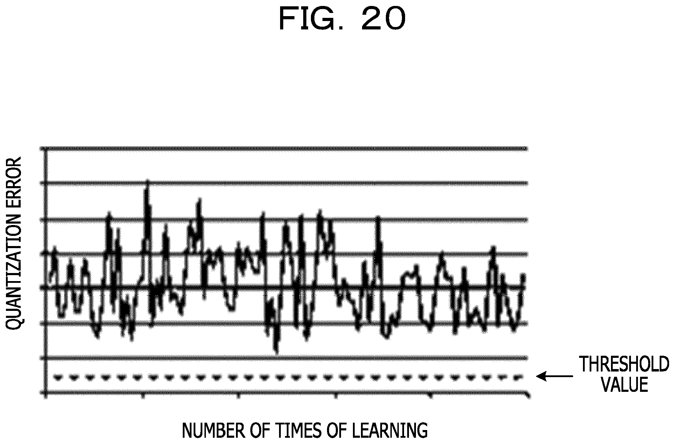

FIG. 20 is a diagram illustrating the relationship between the number of times of learning and the quantization error when the saturation process or the rounding process is performed when the distribution of values of the operation result data is too wide in the learning in the first embodiment. The dotted line in FIG. 20 illustrates a predetermined threshold value at a position corresponding to FIG. 19.
The magnitude of the quantization error illustrated in FIG. 19 is less than the threshold value, and the magnitude of the quantization error illustrated in FIG. 20 is not less than the threshold value. When the distribution of values of the operation result data is not too wide, the number of data to be saturated or rounded out of the quantization range is small, and the quantization error does not increase. On the other hand, when the distribution of values of the operation result data is wide, the number of data to be saturated or rounded out of the quantization range is large, and the quantization error increases.
Although the learning of the NN to the first embodiment has been described, it is not limited to the learning processing, and determining the data type based on the quantization error calculated based on the statistical information may also be applied to inference of the NN.

[Configuration of fixed-point NN processor and acquisition of statistical information]

Next, a configuration of the NN processor 43 according to the first embodiment and acquisition of statistical information will be described.

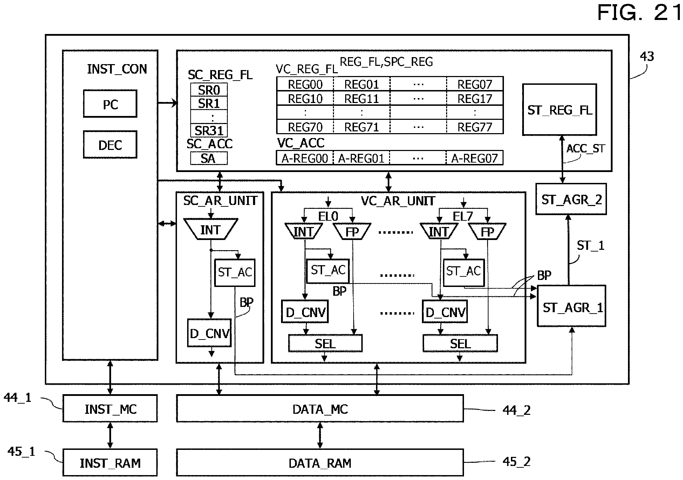

FIG. 21 is a diagram illustrating a configuration example of the NN processor 43. The NN processor 43 has an instruction control unit INST_CON, a register file REG_FL, a special register SPC_REG, a scalar operation unit SC_AR_UNIT, a vector operation unit VC_AR_UNIT, and statistical information aggregators ST_AGR_1, ST_AGR_2.

The NN processor 43 has an integer arithmetic unit INT that calculates a fixed-point number and a floating-point arithmetic unit FP that calculates a floating-point number in the vector operation unit VC_AR_UNIT. For example, the NN processor 43 has the NN processor 43_1 that executes a fixed-point arithmetic and the NN processor 43_2 that executes a floating-point arithmetic.

Furthermore, the NN processor 43 is connected to an instruction memory 45_1 and a data memory 45_2 via the memory access controller 44. The memory access controller 44 has an instruction memory access controller 44_1 and a data memory access controller 44_2.

The instruction control unit INST_CON has, for example, a program counter PC and an instruction decoder DEC. The instruction control unit INST CON fetches an instruction from the instruction memory 45 1 based on an address of the program counter PC, and the instruction decoder DEC decodes the fetched instruction and issues it to an operation unit.

The register file REG_FL has a scalar register file SC REG FL and a scalar accumulation register SC ACC used by the scalar operation unit SC AR UNIT. Moreover, the register file REG_FL has a vector register file VC_REG_FL and a vector accumulation register VC_ACC used by the vector operation unit VC_AR_UNIT.

The scalar register file SC_REG_FL includes scalar registers SR0 to SR31 each of which is 32-bit for example, and scalar accumulation registers SC_ACC each of which is 32-bit + $\alpha$-bit for example.

The vector register file VC_REG_FL has, for example, eight sets of REGn0 to REGn7, each having 32-bit registers by the number of eight elements. Furthermore, the vector accumulation register VC ACC has, for example, A REG0 to A_REG7 each having a 32-bit + $\alpha$-bit register by the number of 8 elements.

The scalar operation unit SC_AR_UNIT has a set of integer arithmetic unit INT, a data converter D_CNV, and a statistical information acquisition unit ST_AC. The data converter D_CNV converts output data of a fixed-point number output by the integer arithmetic unit INT into a floating-point number. The scalar operation unit SC_AR_UNIT uses the scalar registers SR0 to SR31 and the scalar accumulation register SC ACC in the scalar register file SC REG FL to execute an operation. For example, the integer arithmetic unit INT calculates the input data stored in any of the scalar registers SR0 to SR31 and stores output data thereof in another register. Furthermore, when executing a product-sum operation, the integer arithmetic unit INT stores the result of the product-sum operation in the scalar accumulation register SC ACC. The operation result of the scalar operation unit SC_AR_UNIT is stored in any of the scalar register file SC_REG_FL, the scalar accumulation register SC_ACC, and the data memory 45_2.

The vector operation unit VC_AR_UNIT has eight elements of operation units EL0 to EL7. Each of the elements EL0 to EL7 has an integer arithmetic unit INT, a floating-point arithmetic unit FP, and a data converter D CNV. The vector operation unit VC_AR_UNIT inputs, for example, any set of the eight-element registers REGn0 to REGn7 in the vector register file VC_REG_FL, executes operations in parallel by the eight-element arithmetic units, and stores operation results in another set of the eight-element registers REGn0 to REGn7.

Furthermore, the data converter D CNV shifts, as a result of operation, fixed-point number data acquired as a result of reading from the data memory 45_2, or the like. The data converter D CNV shifts the fixed-point number data by a shift amount S specified in the instruction fetched by the instruction decoder DEC. The shift by the data converter D_CNV corresponds to adjusting the decimal point position corresponding to the fixed-point number format. Furthermore, the data converter D_CNV executes the saturation process of high-order bits and the rounding process of lower-order bits of the fixed-point number data along with the shift. The data converter D_CNV, for example, inputs an operation result of 40 bits and includes a rounding processing unit that performs the rounding process with a low-order bit as a fractional part, a shifter that performs arithmetic shift, and a saturation processing unit that performs the saturation process.

Then, the data converter D CNV maintains the sign of the high-order bit at the time of left shift, performs a saturation process of other than the sign bit or, for example, discards the high-order bit, and embeds 0 in the low-order bit. Furthermore, at the time of right shift, the data converter D CNV embeds the sign bit in the high-order bits (bits lower than the sign bit). Then, the data converter D_CNV outputs the data acquired by the rounding process, the shift, and the saturation process as described above with the same bit width as the register of the register file REG FL. The data converter is an example of a circuit that adjusts the decimal point position of fixed-point number data.

Furthermore, the vector operation unit VC_AR_UNIT executes a product-sum operation by each of the 8-element arithmetic units, and stores cumulative addition values of product-sum operation results in the 8-element registers A_REG0 to A_REG7 of the vector accumulation register VC_ACC.

In the vector registers REGn0 to REGn7 and the vector accumulation registers A_REG0 to A REG7, the number of operation elements increases to 8, 16, 32 depending on whether the bit width of operation target data is 32 bits, 16 bits or 8 bits.

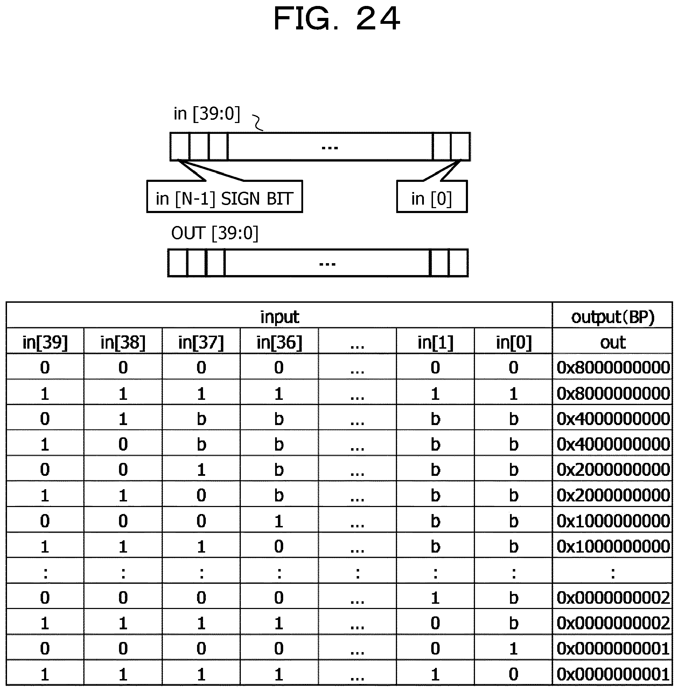

The vector operation unit VC_AR_UNIT has eight statistical information acquisition units ST AC for respectively acquiring statistical information of output data of the 8-element integer arithmetic unit INT. The statistical information is position information of the most significant bits that are unsigned of output data of the integer arithmetic unit INT. The statistical information is acquired as a bit pattern BP described later with reference to FIG. 24 described later. The statistical information acquisition unit ST AC may input data in the data memory 45_2 and data in the scalar register file SC_REG_FL and the scalar accumulation register SC_ACC in addition to output data of the integer arithmetic unit INT and acquire statistical information thereof.

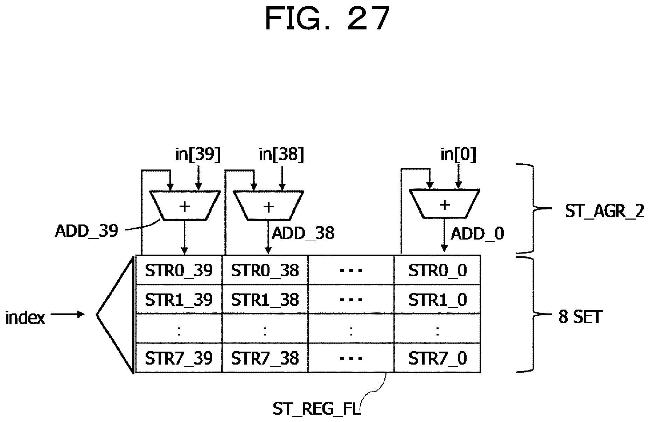

The statistical information register file ST_REG_FL has, for example, eight sets of statistical information registers STRn_0 to STRn 39 each having, for example, 32 bits $\times$ 40 elements, as illustrated in FIG. 27 described later.

The scalar registers SR0 to SR31 store, for example, addresses and variables of NNs, or the like. Furthermore, the vector registers REG00 to REG77 store input data and output data of the vector operation unit VCAR UNIT. Then, the vector accumulation register VC_ACC stores a multiplication result and an addition result of the vector registers with each other.

The statistical information registers STR0_0 to STR0_39... STR7_0 to STR7_39 store the number of pieces of data belonging to a plurality of bins of a maximum of eight types of histograms. When the output data of the integer arithmetic unit INT is 40 bits, the number of data having the unsigned most significant bit in each of 40 bits is stored in, for example, the statistical information registers STR0_0 to STR0_39.

The scalar operation unit SC_AR_UNIT has four arithmetic operations, shift operations, branches, load-store, and the like. As described above, the scalar operation unit SC_AR_UNIT has the statistical information acquisition unit ST_AC that acquires the statistical information having the positions of the most significant bits that are unsigned from the output data of the integer arithmetic unit INT.

The vector operation unit VC_AR_UNIT executes a floating-point arithmetic, an integer operation, a product-sum operation using the vector accumulation register VC_ACC, and the like. Furthermore, the vector operation unit VC_AR_UNIT executes clearing of the vector accumulation register VC_ACC, product-sum operation, cumulative addition, transfer to the vector register file VC_REG_FL, and the like. Moreover, the vector operation unit VC_AR_UNIT also performs load and store. As described above, the vector operation unit VC_AR_UNIT has the statistical information acquisition unit ST_AC that acquires the statistical information having positions of the most significant bits that are unsigned from the output data of the integer arithmetic unit INT of each of the eight elements.

[Acquisition, aggregation, and storage of statistical information]

Next, acquisition, aggregation, and storage of the statistical information of operation result data by the NN processor 43 will be described. The acquisition, aggregation, and storage of the statistical information are commands transmitted from the host processor 31, and are executed by using a command executed by the NN processor 43 as a trigger. Therefore, the host processor 31 transmits, to the NN processor 43, an instruction to acquire, aggregate, and store the statistical information, in addition to an operation instruction of each layer of the NN. Alternatively, the host processor 31 transmits, to the NN processor 43, an operation instruction with a process of acquiring, aggregating, and storing statistical information for the operation of each layer.

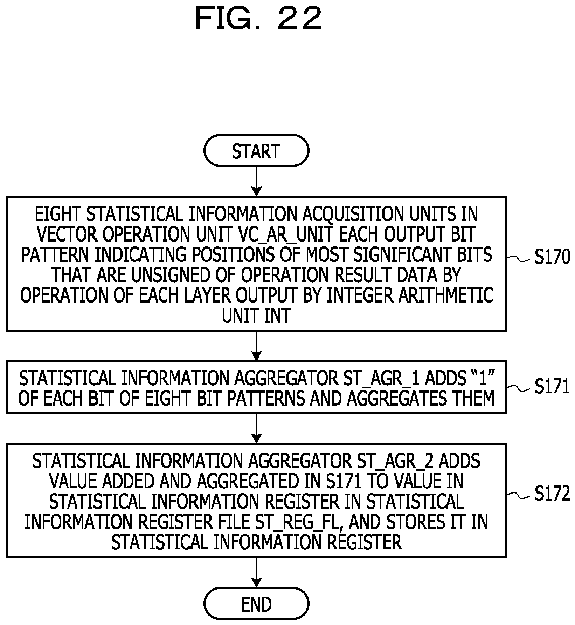

FIG. 22 is a flowchart illustrating a process of acquiring, aggregating, and storing the statistical information by the NN processor 43. First, the eight statistical information acquisition units ST AC in the vector operation unit VC_AR_UNIT each output a bit pattern indicating positions of the most significant bits that are unsigned of operation result data by the operation of each layer output by the integer arithmetic unit INT (S170). The bit pattern will be described later.

Next, the statistical information aggregator ST_AGR_1 adds "1" of each bit of eight bit patterns and aggregates them (S171).

Moreover, the statistical information aggregator ST_AGR_2 adds the value added and aggregated in S171 to the value in the statistical information register in the statistical information register file ST_REG_FL, and stores it in the statistical information register (S172).

The above processes S170, S171, S172 are repeated every time the operation result data that is the result of operation of each layer by the eight elements EL0 to EL7 in the vector operation unit VC_AR_UNIT is generated.

In the learning process, when the acquisition, aggregation, and storage process of the statistical information described above is completed for a plurality of operation result data in K mini-batches, the statistical information register file ST REG FL generates statistical information that is the number of respective bins of the histogram of the most significant bits that are unsigned of a plurality of pieces of operation result data in the K mini-batches. Consequently, the sum of positions of the most significant bits that are unsigned of the operation result data in the K mini-batches is aggregated for each bit. The decimal point position of each operation result data is adjusted based on this statistical information.

The adjustment of the decimal point position of the operation result data of each layer is performed by the host processor 31 of the host machine 30, for example. The statistic information of each layer stored in the statistical information registers STR0_0 to STR0_39 is written in the data memory 45 2 of the host machine 30, and the host processor 31 performs an operation to execute the process described in FIG. 22. The host processor 31 acquires the difference between the newly determined decimal point position and the current decimal point position, and writes it as the shift amount S in the data memory 45_2.

[Acquisition of statistical information]

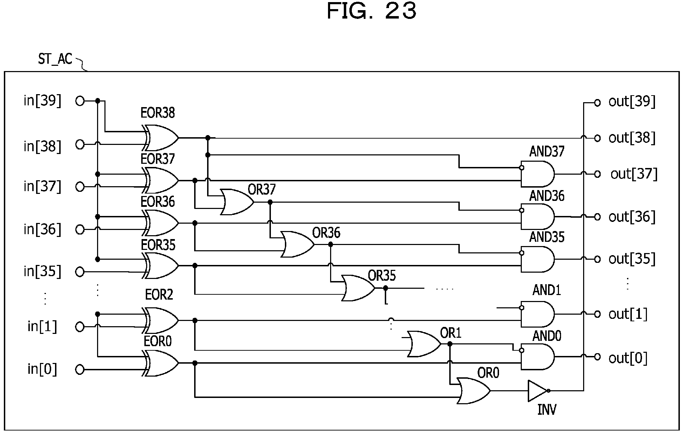

FIG. 23 is a diagram illustrating an example of a logic circuit of the statistical information acquisition unit ST_AC. Furthermore, FIG. 24 is a diagram illustrating a bit pattern BP of operation result data acquired by the statistical information acquisition unit ST AC. The statistical information acquisition unit ST AC inputs N-bit (N = 40) operation result data (for example, operation result data of convolutional operation in forward propagation processing, update difference of error or weight in back propagation processing) in[39: 0] output by the integer arithmetic unit INT, and outputs a bit pattern output out[39: 0] in which the position of the most significant bit that is unsigned is indicated by "1" and other positions are indicated by "0".

As illustrated in FIG. 24, the statistical information acquisition unit ST_AC outputs, as the bit pattern BP, an output out[39: 0] that takes "1" at the position of the most significant bit that is unsigned (1 or 0 different from the sign bit) for an input in[39: 0] that is operation result data, and takes "0" at other positions. However, when all the bits of the input in[39: 0] are the same as the sign bit, the most significant bit is exceptionally set to "1". FIG. 24 illustrates a truth table of the statistical information acquisition unit ST AC.

According to this truth table, the first two rows are examples in which all bits of the input in[39: 0] match the sign bits "1" and "0", and the most significant bit out[39] of the output out[39: 0] is "1" (0x8000000000). The next two rows are examples in which 38 bits in[38: 0] of the input in[39: 0] are different from the sign bits "1" and "0", and 38 bit out[38] of the output out[39: 0] is "1" and the others are "0". The bottom two rows are examples in which the 0 bit in[0] of the input in[39: 0] is different from the sign bit "1" and "0", the 0 bit out[0] of the output out[39: 0] is "1", and others are "0".

In the logic circuit diagram illustrated in FIG. 23, the position of the most significant bit that is unsigned is detected as follows. First, when the sign bits in[39] and in[38] do not match, the output of an EOR 38 becomes "1" and the output out[38] becomes "1". When the output of the EOR 38 becomes "1", the other outputs out[39] and out[38: 0] become "0" due to logical sums OR37 to OR0, logical products AND37 to AND0 and an inverting gate INV.

Furthermore, if the sign bit in[39] matches in[38] and does not match in[37], the output of the EOR 38 becomes "0", the output of an EOR 37 becomes "1", and the output out[37] becomes "1". When the output of the EOR 37 becomes "1", the other outputs out[39: 38] and out[36: 0] become "0" due to the logical sums OR36 to OR0, the logical products AND36 to AND0 and the inverting gate INV. The same applies below.

As can be understood from FIGs. 23 and 24, the statistical information acquisition unit ST_AC outputs, as the bit pattern BP, distribution information including the position of the most significant bit of "1" or "0" different from the sign bit of operation result data that is an operation result.

[Aggregation of statistical information]

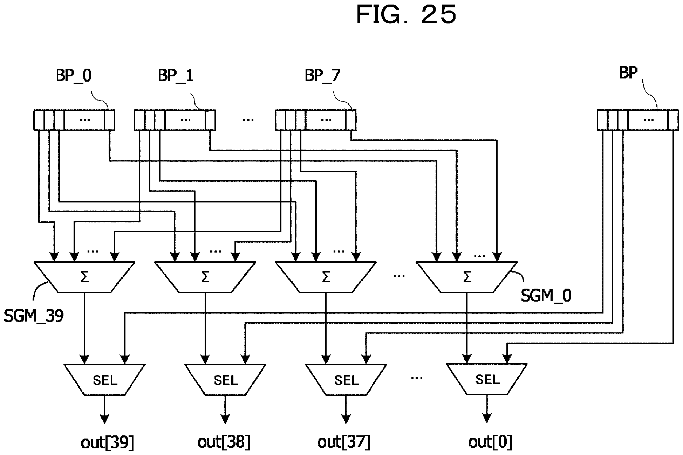

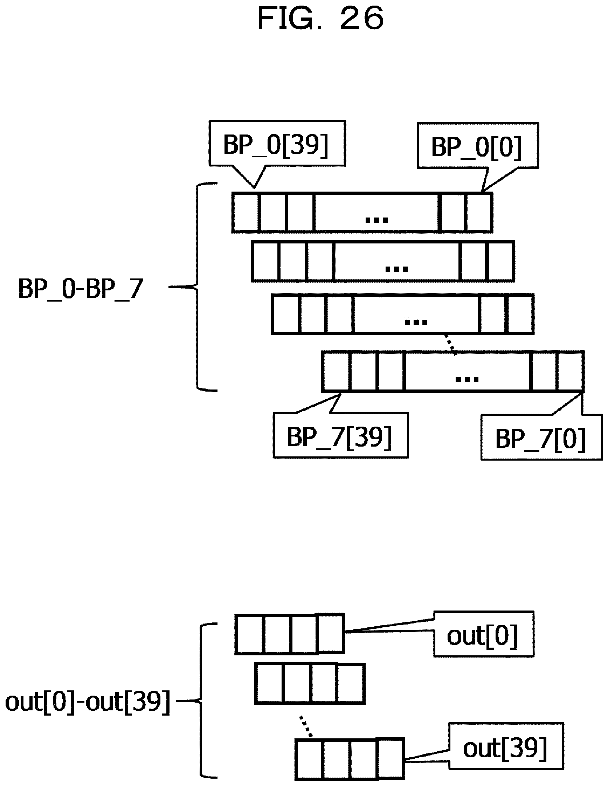

FIG. 25 is a diagram illustrating an example of a logic circuit of the statistical information aggregator ST AGR 1. Furthermore, FIG. 26 is a diagram describing an operation of the statistical information aggregator ST_AGR_1. The statistical information aggregator ST_AGR_1 inputs bit patterns BP_0 to BP_7, which are eight pieces of statistical information acquired by the vector operation unit VC_AR_UNIT, and adds "1" of each bit of the eight bit patterns BP_0 to BP_7, so as to output outputs out[0] to out[39]. The bit patterns BP 0 to BP_7 each have 40 bits, and out[0] to out[39] each have 4 bits, for example.

As illustrated in the logic circuit of FIG. 25, the statistical information aggregator ST AGR 1 is configured to add "1" of each bit of each of the bit patterns BP_0 to BP_7 acquired by each statistical information acquisition unit ST AC of the vector operation unit VC_AR_UNIT in addition circuits SGM_0 to SGM_39, so as to generate addition results as outputs out[0] to out[39]. As illustrated in the output of FIG. 26, the outputs are out[0] to out[39]. Each bit of the output is $\log_2$ (the number of elements = 8) + 1 bit so that the number of elements can be counted, and when the number of elements is 8, it becomes 4 bits.

The statistical information aggregator ST_AGR_1 can also directly output one bit pattern BP as it is acquired by the statistical information acquisition unit ST AC in the scalar operation unit SC AR UNIT. For this purpose, it has a selector SEL that selects either the outputs of the addition circuits SGM 0 to SGM_39 or the bit pattern BP of the scalar operation unit SC_AR_UNIT.

FIG. 27 is a diagram illustrating an example of the second statistical information aggregator ST_AGR_2 and the statistical information register file ST_REG_FL. The second statistical information aggregator ST_AGR_2 adds the value of each bit of the outputs out[0] to out[39] aggregated by the first statistical information aggregator ST AGR 1 to the value of one register set in the statistical information register file ST_REG_FL, and stores it.

The statistical information register file ST_REG_FL has, for example, eight sets of 40 32-bit registers STRn_39 to STRn_0 (n = 0 to 7). Therefore, it is possible to store the number of 40 bins for each of eight types of histograms. Now, let us suppose that the statistical information to be aggregated is stored in the 40 32-bit registers STR0_39 to STR0_0 with n = 0. The second statistical information aggregator ST_AGR_2 has adders ADD_39 to ADD_0 for adding the value of each of the aggregated values in[39: 0] aggregated by the first statistical information aggregator ST AGR 1 for each of cumulative addition values stored in the 40 32-bit registers STR0_39 to STR0_0. Then, the outputs of the adders ADD_39 to ADD_0 are stored again in the 40 32-bit registers STR0_39 to STR0_0. Thus, the number of samples in each bin of the target histogram is stored in the 40 32-bit registers STR0_39 to STR0_0.

By hardware circuits of the statistical information acquisition unit ST AC and the statistical information aggregator ST_AGR_1, ST_AGR_2 provided in the operation unit illustrated in FIGs. 21, 23, 25, and 27, it is possible to acquire the distribution (the number of samples in each bin of the histogram) of the position of the most significant bit (the position of the most significant bit of effective bits) that is unsigned of operation result data calculated in each layer of the NN.

In addition to the distribution of positions of the most significant bits that are unsigned, the distribution of the least significant bits that are non-zero may be acquired by a hardware circuit of the NN processor 43 in a manner similar to the above. Moreover, the maximum value of positions of the most significant bits that are unsigned and the minimum value of the positions of the least significant bits that are non-zero may be acquired similarly.

Since the statistical information can be acquired by the hardware circuit of the NN processor 43, adjustment of the fixed-point position of operation result data in learning can be implemented with a slight increase in the number of steps.

**Claims**

1. An information processing apparatus that executes learning of a neural network, the apparatus comprising:

an operation part that executes a predetermined operation on each of a plurality of pieces of input data so as to generate a plurality of pieces of first operation result data that is a result of the predetermined operation;
a statistical information acquisition unit that acquires statistical information regarding a distribution of digits of most significant bits that are unsigned for each of the plurality of pieces of first operation result data;
a register that stores the plurality of pieces of first operation result data based on a predetermined data type; and
a control unit that

executes a saturation process or a rounding process on the plurality of pieces of first operation result data based on, out of a first data type and a second data type that represent operation result data with a predetermined bit width, the second data type having a narrower bit width than the first data type, so as to generate a plurality of pieces of second operation result data;
calculates a first sum total based on the statistical information by adding up a value acquired for every one of the digits by multiplying a number of data in which the most significant bits are distributed to the digits in the plurality of pieces of first operation result data by a value of the digit,
calculates a second sum total based on the statistical information by adding up a value acquired for every one of the digits by multiplying a number of data in which the most significant bits are distributed to the digits in the plurality of pieces of second operation result data by a value of the digit,
calculates a first quantization difference that is a difference between the first sum total and the second sum total, and
stores the plurality of pieces of second operation result data in the register when the calculated first quantization difference is less than a predetermined threshold value.

2. The information processing apparatus according to claim 1, wherein

the saturation process is a process to change, among the plurality of pieces of first operation result data, data in which the most significant bits are distributed to digits larger than a maximum digit of a bit width narrower than the first data type to data having values in which the most significant bits are distributed to the maximum digit, and
the rounding process is a process to change, among the plurality of pieces of first operation result data, data in which the most significant bits are distributed to digits smaller than a minimum digit of a bit width narrower than the first data type to data having values in which the most significant bits are distributed to the minimum digit.

3. The information processing apparatus according to claim 1 or 2, wherein
the control unit stores the plurality of pieces of first operation result data in the register when the first quantization difference is equal to or more than the predetermined threshold value.

4. The information processing apparatus according to any one of claims 1 to 3, wherein

a plurality of pieces of third operation result data is generated by executing the saturation process or the rounding process on the plurality of pieces of first operation result data based on a range of a first digit, a third sum total is calculated based on the statistical information by adding up a value acquired for every one of the digits by multiplying a number of data in which the most significant bits are distributed to the digits in the plurality of pieces of third operation result data by a value of the digit, a second quantization difference is calculated that is a difference between the first sum total and the third sum total, a plurality of pieces of fourth operation result data is generated by executing the saturation process or the rounding process on the plurality of pieces of first operation result data based on a range of a second digit having a same bit width as the range of the first digit, a fourth sum total is calculated based on the statistical information by adding up a value acquired for every one of the digits by multiplying a number of data in which the most significant bits are distributed to the digits in the plurality of pieces of fourth operation result data by a value of the digit, a third quantization difference is calculated that is a difference between the first sum total and the fourth sum total, and the second quantization difference and the third quantization difference are compared and, based on the range of the digit of which the quantization difference is smaller out of the range of the first digit and the range of the second digit, executing the saturation process or the rounding process on the plurality of pieces of first operation result data is determined.

5. The information processing apparatus according to any one of claims 1 to 4, wherein among a plurality of the first quantization differences calculated from each of the plurality of pieces of the statistical information acquired for each of a plurality of pieces of sequentially input data, the control unit determines the predetermined threshold value based on a difference between at least two of the first quantization differences.

6. The information processing apparatus according to any one of claims 1 to 5, wherein the first data type is a data type using a floating-point number, and the second data type is a data type using a fixed-point number.

7. An information processing apparatus that executes inference of a neural network, the apparatus comprising:

an operation part that executes a predetermined operation on each of a plurality of pieces of input data so as to generate a plurality of pieces of first operation result data that is a result of the predetermined operation; a statistical information acquisition unit that acquires statistical information regarding a distribution of digits of most significant bits that are unsigned for each of the plurality of pieces of first operation result data; a register that stores operation result data based on a predetermined data type; and a control unit that executes a saturation process or a rounding process on the plurality of pieces of first operation result data based on, out of a first data type and a second data type that represent operation result data with a predetermined bit width, the second data type having a narrower bit width than the first data type, so as to generate a plurality of pieces of second operation result data; calculates a first sum total based on the statistical information by adding up a value acquired for every one of the digits by multiplying a number of data in which the most significant bits are distributed to the digits in the plurality of pieces of first operation result data by a value of the digit, calculates a second sum total based on the statistical information by adding up a value acquired for every one of the digits by multiplying a number of data in which the most significant bits are distributed to the digits in the plurality of pieces of second operation result data by a value of the digit, calculates a first quantization difference that is a difference between the first sum total and the second sum total, and compares the calculated first quantization difference with a predetermined threshold value, and stores the plurality of pieces of second operation result data in the register when the calculated first quantization difference is less than the predetermined threshold value.

8. An information processing method by an information processing apparatus having an operation part that executes a predetermined operation part on each of a plurality of pieces of input data and a register that stores operation result data based on a predetermined data type and executing learning of a neural network, the method comprising:

executing by an operation part a predetermined operation on each of a plurality of pieces of input data so as to generate a plurality of pieces of first operation result data that is a result of the predetermined operation;
acquiring statistical information regarding a distribution of digits of most significant bits that are unsigned for each of the plurality of pieces of first operation result data;
executing a saturation process or a rounding process on the plurality of pieces of first operation result data based on, out of a first data type and a second data type that represent operation result data with a predetermined bit width, the second data type having a narrower bit width than the first data type, so as to generate a plurality of pieces of second operation result data;
calculating a first sum total based on the statistical information by adding up a value acquired for every one of the digits by multiplying a number of data in which the most significant bits are distributed to the digits in the plurality of pieces of first operation result data by a value of the digit;
calculating a second sum total based on the statistical information by adding up a value acquired for every one of the digits by multiplying a number of data in which the most significant bits are distributed to the digits in the plurality of pieces of second operation result data by a value of the digit;
calculating a first quantization difference that is a difference between the first sum total and the second sum total; and
comparing the calculated first quantization difference with a predetermined threshold value, and stores the plurality of pieces of second operation result data in the register when the calculated first quantization difference is less than the predetermined threshold value.

9. A program for causing an information processing apparatus that has an operation part that executes a predetermined operation part on each of a plurality of pieces of input data, and a register that stores operation result data based on a predetermined data type and executes learning of a neural network, to execute a digital signature process comprising:

executing by an operation part a predetermined operation on each of a plurality of pieces of input data so as to generate a plurality of pieces of first operation result data that is a result of the predetermined operation;
acquiring statistical information regarding a distribution of digits of most significant bits that are unsigned for each of the plurality of pieces of first operation result data;
executing a saturation process or a rounding process on the plurality of pieces of first operation result data based on, out of a first data type and a second data type that represent operation result data with a predetermined bit width, the second data type having a narrower bit width than the first data type, so as to generate a plurality of pieces of second operation result data;
calculating a first sum total based on the statistical information by adding up a value acquired for every one of the digits by multiplying a number of data in which the most significant bits are distributed to the digits in the plurality of pieces of first operation result data by a value of the digit;
calculating a second sum total based on the statistical information by adding up a value acquired for every one of the digits by multiplying a number of data in which the most significant bits are distributed to the digits in the plurality of pieces of second operation result data by a value of the digit;
calculating a first quantization difference that is a difference between the first sum total and the second sum total; and
comparing the calculated first quantization difference with a predetermined threshold value, and stores the plurality of pieces of second operation result data in the register when the calculated first quantization difference is less than the predetermined threshold value.

FIG. 1

INPUT DATA → INPUT → Conv_1 → Pool_1 → Conv_2 → Pool_2 → fc1 → fc2 → OUTPUT → OUTPUT DATA / TEACHER DATA

# FIG. 2

START

REARRANGE COMBINATIONS OF INPUT DATA AND TEACHER DATA — S1

DETERMINE VARIABLE TO BE QUANTIZED — S2

DIVIDE INPUT DATA AND TEACHER DATA INTO PLURALITY OF MINI-BATCHES — S3

QUANTIZATION PROCESS — S4

FORWARD PROPAGATION PROCESS — S5

ERROR EVALUATION — S6

BACK PROPAGATION PROCESS — S7

VARIABLE UPDATE — S8

S9
LEARNING OF ALL MINI-BATCHES FINISHED?
NO
YES

S10
FINISHED PREDETERMINED TIMES?
NO
YES

END

# FIG. 3

```
        ⌐30                          ⌐40
┌─────────────────┐         ┌─────────────────┐
│  HOST MACHINE   │─────────│  NN EXECUTION   │
│                 │         │    MACHINE      │
└─────────────────┘         └─────────────────┘
         │
         │            ⌐50
┌─────────────────┐
│  USER TERMINAL  │
│                 │
└─────────────────┘
```

# FIG. 4

# FIG. 5

NN EXECUTION MACHINE — 40

HOST MACHINE — 30

HIGH-SPEED INPUT-OUTPUT INTERFACE — 41

43

NN PROCESSOR EXECUTING FIXED-POINT ARITHMETIC — 43_1

NN PROCESSOR EXECUTING FLOATING-POINT ARITHMETIC — 43_2

CONTROL UNIT — 42

USER TERMINAL — 50

MEMORY ACCESS CONTROLLER — 44

INTERNAL MEMORY — 45

# FIG. 6

| HOST MACHINE ～ 30 | | NN EXECUTION MACHINE ～ 40 |
|---|---|---|

S31

TRANSMIT LEARNING PROGRAM →

S32_1

TRANSMIT INPUT DATA OF ONE MINI-BATCH →

S33_1

TRANSMIT LEARNING PROGRAM EXECUTION INSTRUCTION →

S40_1

EXECUTE LEARNING PROGRAM

S32_2

TRANSMIT INPUT DATA OF NEXT ONE MINI-BATCH →

S41_1

END NOTIFICATION OF LEARNING PROGRAM EXECUTION ←

S33_2

TRANSMIT LEARNING PROGRAM EXECUTION INSTRUCTION →

S40_2

EXECUTE LEARNING PROGRAM

S41_2

END NOTIFICATION OF LEARNING PROGRAM EXECUTION ←

·
·
·

# FIG. 7

START

DETERMINE INITIAL DECIMAL POINT POSITION OF EACH DATA — S60

STORE STATISTICAL INFORMATION OF EACH DATA WHILE EXECUTING MINI-BATCH LEARNING — S61

MINI-BATCH LEARNING FINISHED K TIMES? — S62    NO

YES

ADJUST DECIMAL POINT POSITION OF EACH DATA BASED ON STATISTICAL INFORM OF EACH LAYER — S63

LEARNING OF ALL MINI-MATCHES FINISHED? — S64    NO

YES

FINISHED PREDETERMINED TIMES? — S65    NO

YES

END

## FIG. 8

S61

| INPUT DATA | Conv_1 | Pool_1 | Conv_2 | Pool_2 | fc1 | fc2 | TEACHER DATA |
|---|---|---|---|---|---|---|---|

| STATISTICAL INFORMATION | STATISTICAL INFORMATION | STATISTICAL INFORMATION | STATISTICAL INFORMATION | STATISTICAL INFORMATION | STATISTICAL INFORMATION |

STORE DISTRIBUTION OF VALUES OF EACH DATA OF EACH LAYER

S63

| Conv_1 | Pool_1 | Conv_2 | Pool_2 | fc1 | fc2 |
|---|---|---|---|---|---|

| STATISTICAL INFORMATION | STATISTICAL INFORMATION | STATISTICAL INFORMATION | STATISTICAL INFORMATION | STATISTICAL INFORMATION | STATISTICAL INFORMATION |

ADJUST DECIMAL POINT POSITION OF EACH DATA OF EACH LAYER BASED ON STORED STATISTICAL INFORMATION OF EACH LAYER

# FIG. 9

FORWARD PROPAGATION PROCESS

L1

L2

$x_0$

$x_i$

$x_n$

$w_{ij}$

$z_0 | u_0$

$z_j | u_j$

BACK PROPAGATION PROCESS

L6

L5

$\delta_0^{(5)}$

$\delta_j^{(5)}$

$w_{ij}$

$\delta_0^{(6)}$

$\delta_i^{(6)}$

$\delta_n^{(6)}$

# FIG. 10

NUMBER OF DATA IN THIS RANGE / TOTAL NUMBER OF DATA < $r_{max}$

Q5.10

NEXT FIXED-POINT NUMBER FORMAT (Q3.12)

Bmax

13 11 9 7 5 3 1 -1 -3 -5 -7 -9 -11 -13 -15 -17 -19 -21 -23 -25

AREA WHERE OVERFLOW OCCURS AND SATURATION PROCESS IS PERFORMED

REPRESENTABLE AREA

AREA WHERE UNDERFLOW OCCURS AND ROUNDING PROCESS IS PERFORMED

# FIG. 11

NEXT FIXED-POINT NUMBER FORMAT (Q1.14) ADJUSTED SO THAT PEAK COMES TO CENTER

Q4.11

12  10  8  6  4  2  0  -2  -4  -6  -8  -10 -12 -14 -16 -18

# FIG. 12

FROM S62

↓

ACQUIRE MAXIMUM VALUE ub OF STATISTICAL INFORMATION OF LAYER — S631

↓

ACQUIRE MINIMUM VALUE lb OF STATISTICAL INFORMATION OF LAYER — S632

↓

ACQUIRE SPREAD ub − lb + 1 OF DISTRIBUTION — S633

↓

S634

SPREAD ub − lb + 1 OF DISTRIBUTION LARGER THAN BIT WIDTH N EXCLUDING SIGN BIT?

YES →

S636

DETERMINE DIGIT n OF INTEGER PART BASED ON FUNCTION THAT ACQUIRES DIGIT WHOSE OVERFLOW RATE EXCEEDS DEFAULT VALUE r_max

NO ↓

S635

DETERMINE DIGIT n OF INTEGER PART BASED ON CENTER (ub − lb + 1) OF DISTRIBUTION AND CENTER N/2 OF BIT WIDTH

↓

DETERMINE NUMBER m OF DIGITS OF FRACTIONAL PART BASED ON NUMBER n OF DIGITS OF INTEGER PART AND BIT WIDTH N — S637

↓

TO S64

# FIG. 13

FROM S1

DETERMINE PREDETERMINED QUANTIZATION RANGE FOR VARIABLE — S203

CALCULATE QUANTIZATION ERROR OF ALL VARIABLES WHEN QUANTIZATION PROCESS IS PERFORMED WITH DATA TYPE OF NARROW BIT WIDTH AND DETERMINED QUANTIZATION RANGE BASED ON STORED STATISTICAL INFORMATION — S205

DETERMINE PREDETERMINED THRESHOLD VALUE — S206

S207
QUANTIZATION ERROR OF VARIABLE LESS THAN PREDETERMINED THRESHOLD?

NO

YES

S209
DETERMINE OUTPUT OF VARIABLE TO DATA TYPE OF NARROW BIT WIDTH

S211
DETERMINE OUTPUT OF VARIABLE TO DATA TYPE OF WIDE BIT WIDTH

S213
DATA TYPES OF ALL VARIABLES DETERMINED?

NO

YES

TO S3

# FIG. 14

FROM S1

DETERMINE QUANTIZATION RANGE CANDIDATE
WHEN VARIABLE IS QUANTIZED WITH DATA TYPE OF
NARROW BIT WIDTH ⌐∽S2031

CALCULATE QUANTIZATION ERROR OF VARIABLE
WHEN QUANTIZATION PROCESS IS PERFORMED WITH
DETERMINED QUANTIZATION RANGE CANDIDATE
BASED ON STORED STATISTICAL INFORMATION ⌐∽S2033

S2035

QUANTIZATION ERROR
CALCULATED FOR ALL QUANTIZATION
RANGE CANDIDATES?

NO

YES

DETERMINE QUANTIZATION RANGE CANDIDATE FOR
WHICH CALCULATED QUANTIZATION ERROR BECOMES
MINIMUM VALUE AS QUANTIZATION RANGE ⌐∽S2037

TO S205

# FIG. 15

RECOGNITION RATE

NUMBER OF TIMES OF LEARNING

# FIG. 16

# FIG. 17

SATURATION

ROUNDING

QUANTIZATION RANGE

FIG. 18

SATURATION

ROUNDING

QUANTIZATION RANGE

# FIG. 19

QUANTIZATION ERROR

THRESHOLD
VALUE

NUMBER OF TIMES OF LEARNING

# FIG. 20

THRESHOLD
VALUE

QUANTIZATION ERROR

NUMBER OF TIMES OF LEARNING

FIG. 21

# FIG. 22

START

EIGHT STATISTICAL INFORMATION ACQUISITION UNITS IN VECTOR OPERATION UNIT VC_AR_UNIT EACH OUTPUT BIT PATTERN INDICATING POSITIONS OF MOST SIGNIFICANT BITS THAT ARE UNSIGNED OF OPERATION RESULT DATA BY OPERATION OF EACH LAYER OUTPUT BY INTEGER ARITHMETIC UNIT INT — S170

STATISTICAL INFORMATION AGGREGATOR ST_AGR_1 ADDS "1" OF EACH BIT OF EIGHT BIT PATTERNS AND AGGREGATES THEM — S171

STATISTICAL INFORMATION AGGREGATOR ST_AGR_2 ADDS VALUE ADDED AND AGGREGATED IN S171 TO VALUE IN STATISTICAL INFORMATION REGISTER IN STATISTICAL INFORMATION REGISTER FILE ST_REG_FL, AND STORES IT IN STATISTICAL INFORMATION REGISTER — S172

END

# FIG. 23

# FIG. 24

in [39:0]

in [N-1] SIGN BIT

in [0]

OUT [39:0]

| input | | | | | | | output(BP) |
|---|---|---|---|---|---|---|---|
| in[39] | in[38] | in[37] | in[36] | ... | in[1] | in[0] | out |
| 0 | 0 | 0 | 0 | ... | 0 | 0 | 0x8000000000 |
| 1 | 1 | 1 | 1 | ... | 1 | 1 | 0x8000000000 |
| 0 | 1 | b | b | ... | b | b | 0x4000000000 |
| 1 | 0 | b | b | ... | b | b | 0x4000000000 |
| 0 | 0 | 1 | b | ... | b | b | 0x2000000000 |
| 1 | 1 | 0 | b | ... | b | b | 0x2000000000 |
| 0 | 0 | 0 | 1 | ... | b | b | 0x1000000000 |
| 1 | 1 | 1 | 0 | ... | b | b | 0x1000000000 |
| : | : | : | : | : | : | : | : |
| 0 | 0 | 0 | 0 | ... | 1 | b | 0x0000000002 |
| 1 | 1 | 1 | 1 | ... | 0 | b | 0x0000000002 |
| 0 | 0 | 0 | 0 | ... | 0 | 1 | 0x0000000001 |
| 1 | 1 | 1 | 1 | ... | 1 | 0 | 0x0000000001 |

FIG. 25

# FIG. 26

BP_0[39]   BP_0[0]

BP_0-BP_7

...

...

...

...

BP_7[39]   BP_7[0]

out[0]-out[39]

out[0]

out[39]

# FIG. 27

Europäisches
Patentamt

European
Patent Office

Office européen
des brevets

## EUROPEAN SEARCH REPORT

**Application Number**

EP 20 19 5909

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 528893 B1 (FUJITSU LTD) 12 June 2019 (2019-06-12) * the whole document * | 1-9 | INV. G06N3/063 G06N3/08 |
| X,P | & EP 3 657 397 A1 (FUJITSU LTD [JP]) 27 May 2020 (2020-05-27) * abstract * * paragraph [0001] * * paragraph [0009] - paragraph [0011] * * paragraph [0044] - paragraph [0058] * * paragraph [0074] - paragraph [0076] * * paragraph [0094] - paragraph [0095] * * paragraph [0121] - paragraph [0148] * ----- | 1-9 | ADD. G06N3/04 |
| A | US 2019/244097 A1 (NOTSU TAKAHIRO [JP] ET AL) 8 August 2019 (2019-08-08) * abstract * * paragraph [0212] - paragraph [0222] * ----- | 5 | |

**TECHNICAL FIELDS SEARCHED (IPC)**

G06N

The present search report has been drawn up for all claims

| Place of search | Date of completion of the search | Examiner |
|---|---|---|
| The Hague | 19 February 2021 | Papadakis, Georgios |

EPO FORM 1503 03.82 (P04C01)

## ANNEX TO THE EUROPEAN SEARCH REPORT
## ON EUROPEAN PATENT APPLICATION NO.

EP 20 19 5909

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2021

| Patent document cited in search report | | Publication date | Patent family member(s) | | Publication date |
|---|---|---|---|---|---|
| JP 6528893 | B1 | 12-06-2019 | CN | 111160550 A | 15-05-2020 |
| | | | EP | 3657397 A1 | 27-05-2020 |
| | | | JP | 6528893 B1 | 12-06-2019 |
| | | | JP | 2020077143 A | 21-05-2020 |
| | | | US | 2020143232 A1 | 07-05-2020 |
| US 2019244097 | A1 | 08-08-2019 | JP | 2019139338 A | 22-08-2019 |
| | | | US | 2019244097 A1 | 08-08-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7084975 A
- JP 2012203566 A
- JP 2009271598 A
- JP 2018124681 A